# EUROPÄISCHE PATENTSCHRIFT

(11) **EP 3 031 862 B1**
(45) Veröffentlichungstag und Bekanntmachung des Hinweises auf die Patenterteilung: **29.08.2018**
(21) Anmeldenummer: 15191387.8
(22) Anmeldetag: 26.10.2015
(51) Int. Cl.: C08L 77/06

(54) **MEHRSCHICHTSTRUKTUR MIT MINDESTENS EINER METALLSCHICHT UND MINDESTENS EINER POLYAMIDSCHICHT**
MULTILAYER STRUCTURE HAVING AT LEAST ONE METAL LAYER AND AT LEAST ONE POLYAMIDE LAYER
STRUCTURE A PLUSIEURS COUCHES AYANT AU MOINS UNE COUCHE METALLIQUE ET AU MOINS UNE COUCHE POLYAMIDE

(30) Priorität: 11.12.2014 EP 14197318
(43) Veröffentlichungstag der Anmeldung: 15.06.2016
(73) Patentinhaber: EMS-PATENT AG, 7013 Domat / Ems (CH)
(72) Erfinder: STÖPPELMANN, Georg, 7402 Bonaduz (CH); GARCIA, Gabriel, 7013 Domat/Ems (CH)
(74) Vertreter: Bremi, Tobias Hans

(56) Entgegenhaltungen:
- EP-A1- 2 746 342
- WO-A1-2014/170148
- DE-A1-102007 003 327
- US-B1- 6 207 745

## Beschreibung

### TECHNISCHES GEBIET

Die vorliegende Erfindung betrifft Mehrschichtstrukturen mit mindestens einer Metallschicht und mindestens einer Polyamidschicht, insbesondere als oder zur Verwendung als isolierte elektrische Leiter, sowie die Verwendung von Polyamiden zur Beschichtung von Metallen.

### STAND DER TECHNIK

Metallische Drähte aus z.B. Kupfer oder Aluminium finden als Leiter z.B. für die Übertragung von Strom oder für Wicklungen breite Anwendung, u.a. in Automobilen, Elektromotoren, Drehstrommotoren und Transformatoren etc.. Die Drähte sind an ihrer Oberfläche mit einer elektrischen Isolationsbeschichtung versehen, um die Leiter zu schützen und zu isolieren, z.B. einzelne Drahtwindungen gegeneinander, um einen Kurzschluss zu verhindern. Zum Schutz vor Beschädigung und zur Isolation werden metallische Leiter also häufig mit Kunststoffschichten überzogen oder lackiert. Die Isolationsschichten sollen eine hohe Kratz- und Haftfestigkeit sowie einen hohen Widerstand gegen Abrieb aufweisen und müssen aber auch ausreichend flexibel sein, d.h. die Beschichtung sollte beim Biegen und entsprechender Dehnung der Drähte im Rahmen der Weiterverarbeitung nicht reissen. Auch bei Kontakt mit Wasser, Salzlösungen und Chemikalien, insbesondere Brennstoffen und Ölen, sollte insbesondere im Automobilbereich eine solche Beschichtung stabil bleiben.

US-A-2004/0028921 betrifft beschichtete Metalloberflächen, insbesondere für Leitungsrohre aus Metall im Automobilbereich für z.B. Bremsflüssigkeiten, wobei das Metall zunächst mit optionalen Primer- oder Haftvermittlerschichten versehen wird, bevor eine Schicht aus einer Mischung aus Polyamid und Carbonsäureanhydrid modifizierten Polyolefinen aufgetragen wird. Das Metall kann Aluminium sein, als Polyamid wird teilkristallines Polyamid wie z.B. PA11 und PA12 sowie weitere aliphatische Polyamide genannt.

EP-A-1 351 000 beschreibt Kraftstoffleitungen aus Stahl, optional mit Aluminium beschichtet, die mittels Extrusion mit einer Schicht aus PA12 versehen werden.

US-A-2001/0023537 betrifft durch Extrusion beschichtete Metallartikel, bei denen das Metall zunächst mit einer organischen Silanverbindung und nachfolgend mit einem Polyamid beschichtet wird. Als Polyamide wird eine grosse Auswahl üblicher Polyamide ohne besondere Präferenz genannt.

Ein Beispiel für eine Metallbeschichtung mit Polyamid-Pulvern im Wirbelsinterverfahren wird in DE-T-697 04 007 und in der DE-T-695 26 745 beschrieben. Nach der Beschichtung des Metalls wird das Polyamid-Pulver durch Wärmeeinfluss geschmolzen, so dass ein geschlossener Kunststoffüberzug auf dem Metall entsteht. Beschichtet werden Stahlplatten mit PA11 unter optionaler Verwendung von Füllstoffen.

In DE-A-10 2007 054 004 werden Metallverbunde aus einem metallischen Grundprofil und ein oder zwei teilweise überlappenden Kunststoffprofilen beschrieben. Konkret genannt werden für das Kunststoffelement A die Polyamide PA6 und PA66 und für das Kunststoffelement B das Polyamid PA12.

US-B-6291024 beschreibt beschichtete Metalloberflächen, wobei die Struktur aufeinanderfolgend aus einem Metall, einer Schicht aus thermoplastischem Polyurethan und einer Schicht eines davon verschiedenen Thermoplasten besteht. Optional können Haftvermittlerschichten zum Einsatz kommen. Zur Anwendung kommt eine solche Struktur bei Rohren, Elektro- und Telekommunikationskabeln. Als Thermoplaste werden u.a. Polyamide und Polyolefine genannt.

Sehr ähnlich ist die US-B-6235361. Sie beschreibt einen Aufbau bei dem auf die Metalloberfläche zunächst eine Schicht aus Epoxidharz folgt, auf der dann eine Polypropylen basierte Haftvermittlerschicht und darauf eine Thermoplastschicht folgt. Thermoplast kann u.a. Polyamid sein.

Aus der EP-A-2 746 342 ist die Verwendung einer Polyamidformmasse zur Herstellung eines anfärberesistenten Artikels, bei welchem die Anfärbeneigung (AN) wenigstens 2 ist, bekannt. Die Masse enthält dabei 30 - 100 Gew.-% eines Polyamids oder einer Polyamidmischung, bestehend aus 50 - 100 Gew.-% mindestens eines amorphen oder mikrokristallinen Polyamids mit einer Glasübergangstemperatur von wenigstens 100°C, basierend auf einem cycloaliphatischen Diamin sowie aromatischen oder aliphatischen Dicarbonsäuren mit mindestens 6 Kohlenstoffatomen.

Aus der DE 10 2007 003327 ist eine Folie bekannt, die folgende Schichten enthält: I. eine Schicht auf Basis eines Polyamids, dessen Monomereinheiten im Durchschnitt mindestens 8 C-Atome enthalten, II. eine unmittelbar benachbarte Schicht aus einer Formmasse, die ein Polyamid wie unter I. sowie ein Copolymeres enthält, das funktionelle Gruppen besitzt, Die Folie wird zur Herstellung eines Verbundes mit einem Substrat verwendet, das PA6, PA66, PA6/66 oder PPA enthält, wobei eine feste Haftung resultiert.

WO-A-2014170148 beschreibt die Verwendung von thermoplastischen Formmassen, enthaltend ein thermoplastisches Polyamid, roten Phosphor, ein Dialkylphosphinsäuresalz, und ein Ethylencopolymerisat als Schlagzähmodifier zur Herstellung von flammgeschützten, glühdrahtbeständigen Formkörpern.

### DARSTELLUNG DER ERFINDUNG

Es ist entsprechend unter anderem Aufgabe der vorliegenden Erfindung eine verbesserte Schichtstruktur mit einem Metallelement in Form eines Endlosprofil und einer umlaufend und ohne Haftvermittlerschicht auf dem Metallelement angeordneten Polyamidschicht zur Verfügung zu stellen. Die Schichtstruktur soll dabei insbesondere in Form eines elektrischen Leiters eine grosse Widerstandsfähigkeit gegenüber Lagerung in einer Salzlösung unter elektrischer Spannung und bei erhöhter Temperatur über eine ausgedehnte Zeitspanne aufweisen und auch unter diesen Bedingungen weder hinsichtlich Haftung noch hinsichtlich Brüchigkeit der Polyamidschicht nachteilige Eigenschaften aufweisen.

Nach der Erfindung wird diese Aufgabe unter anderem gelöst durch eine Schichtstruktur gemäss Anspruch 1 respektive durch die vorgeschlagenen Verwendungen.

Konkret betrifft die vorliegende Erfindung eine Schichtstruktur mit wenigstens einem Metallelement und wenigstens einer wenigstens bereichsweise auf dem Metallelement angeordneten Polyamidschicht, welche dadurch gekennzeichnet ist, dass die Polyamidschicht aus einer Polyamidformmasse besteht, die eine Mischung ist. Diese Mischung besteht dabei aus folgenden Komponenten (a) und (b), sowie gegebenenfalls (c) und/oder (d):
(a) ein, vorzugsweise amorphes, Polyamid in der beanspruchten Proportion auf Basis cycloaliphatischer Diamine, cycloaliphatischer Dicarbonsäuren, oder sowohl cycloaliphatischer Diamine als auch cycloaliphatischer Dicarbonsäuren, oder eine Mischung derartiger, vorzugsweise amorpher, Polyamide, mit einer Glasübergangstemperatur (Tg) von wenigstens 130 °C;
(b) in der beanspruchten Proportion ein Polyolefin auf Basis von C2-C12 Alkenen, vorzugsweise auf Basis von C2 - C8 oder C2-C5 Alkenen, in verzweigter oder unverzweigter Form, oder einer Mischung davon,
   und zusätzlich wenigstens einem Monomer ausgewählt aus der folgenden Gruppe: Maleinsäureanhydrid, Itaconsäureanhydrid, Glycidylacrylat, Glycidylmethacrylat, Acrylsäure, Methacrylsäure, Vinylacetat, C1-C12-Alkylacrylate, vorzugsweise Ethylacrylat oder Butylacrylat, C1-C12-Alkylmethacrylate, substituiertes oder unsubstituiertes Styrol, oder einer Mischung derartiger Monomere;
(c) in der beanspruchten Proportion ein aliphatisches Polyamid verschieden von (a) oder eine Mischung derartiger Polyamide;
(d) in der beanspruchten Proportion Additive.

Dies mit der Massgabe, dass der Anteil an Komponenten (c) und (d) auch null sein kann (diese Komponenten sind also optional), und mit der Massgabe, dass die Summe der Komponenten (a)-(d) 100 Gew.-% ausmacht, d.h. es gibt keine weiteren Komponenten als die Komponenten (a) und (b) sowie gegebenenfalls (c) und/oder (d).

Unter dem Begriff der Alkene werden aliphatische, aus Kohlenstoff und Wasserstoff aufgebaute Kohlenwasserstoffe verstanden, die an beliebiger Position mindestens eine Kohlenstoff-Kohlenstoff-Doppelbindung im Molekül besitzen. Eingeschlossen sind damit auch Polyene wie Diene und Triene, nicht aber eingeschlossen in den Begriff der Alkene sind aromatische Kohlenwasserstoff-Systeme, d.h. Ringsysteme mit nach der Hückel-Regel konjugierten Doppelbindungen.

Tatsächlich zeigt es sich, dass die bekannten Beschichtungen aus Polyamid 12 den Test für elektrische Leiter insbesondere im Automobilbereich in einer Salzlösung bei erhöhter Temperatur unter elektrischer Spannung und über ausgedehnte Zeiträume wie beispielsweise 1000 Stunden nicht überstehen. Bei einem Leiter aus Aluminium, der mit einer Polyamid 12 Polyamidschicht beschichtet ist, gelangen Ionen durch Migration durch die Polyamidschicht hindurch zum Aluminiumleiter, so dass elektrochemische Vorgänge am Aluminium ablaufen können. Die elektrochemischen Vorgänge, die dabei gebildeten chemischen Substanzen und deren Folgereaktionen mit dem Aluminium, wie z.B. Bildung von Aluminiumchlorid oder Aluminiumhydroxid, sowie mit der Polyamidschicht führen zur Reduktion der Haftung zwischen Metallelement und Polyamidschicht und zu einer Degradation der Polyamidschicht. Somit können all diese Vorgänge schliesslich zu einer teilweisen Ablösung der Ummantelungsschicht vom Metallelement und einer Beschädigung der Ummantelung führen, was sich in einer Rissbildung oder gar einem stellenweissen Aufplatzen der Ummantelung zeigt und wodurch die isolierende Wirkung der Ummantelung verloren geht. Leiter mit einer Beschichtung aus Polyamid 12 können entsprechend diese neuen höheren Anforderungen nicht erfüllen.

Die nun vorgeschlagene, vorzugsweise amorphe, Komponente (a) löst diese Probleme an sich, führt zu einer genügenden Haftung auf dem metallischen Leiter, ohne die zusätzliche Anwesenheit von Komponente (b) sind derartige Beschichtungen aus Komponente (a) aber zu wenig dehnbar und sind zu spröde. Es ist also die spezifische Kombination aus den Komponenten (a) und (b), sowie gegebenenfalls den weiteren Komponenten (c) und/oder (d), die die erfindungsgemässen Eigenschaften, wie sie insbesondere weiter unten bei den Ausführungsbeispielen dokumentiert werden, gewährleisten können.

Gemäss der Erfindung ist die Polyamidformmasse eine Mischung der genannten Komponenten (a)-(d) mit folgenden Anteilen, wobei die angegebenen Bereiche für die Komponenten (a)-(d) einzeln oder in Kombination gewählt werden können, und wobei die angegebenen Gewichtsanteile sich immer auf die Gesamtsumme von (a)-(d) beziehen:
Die Komponente (a) liegt in einem Anteil von 60-90 Gew.-%, vorzugsweise 65-90 Gew.-% vor.
Die Komponente (b) liegt in einem Anteil von 10-40 Gew.-%, vorzugsweise 10-20 Gew.-%, vor.
Die Komponente (c) liegt in einem Anteil von 0-20 Gew.-%, vorzugsweise 10-20 Gew.%, vor.
Die Komponente (d) liegt in einem Anteil von 0-25 Gew.-%, vorzugsweise 0.1-5 Gew.-%, vor.

Die **Komponente (a)** ist ein Polyamid auf Basis cycloaliphatischer Diamine, cycloaliphatischer Dicarbonsäuren, oder sowohl cycloaliphatischer Diamine als auch cycloaliphatischer Dicarbonsäuren, oder eine Mischung derartiger amorpher Polyamide, mit einer Glasübergangstemperatur (Tg) von wenigstens 130 °C.

Vorzugsweise besteht Komponente (a) aus Polyamiden, die eine Glasübergangstemperatur von wenigstens 140 °C oder weiterhin vorzugsweise 150°C aufweisen, dabei aber bevorzugt eine Glasübergangstemperatur von nicht mehr als 220°C oder nicht mehr als 200°C besitzen. Insbesondere bevorzugt werden Polyamide der Komponente (a), deren Glasübergangstemperatur, bestimmt bei einer Gleichgewichtsfeuchte erreicht nach Konditionierung gemäss ISO 1110 (Lagerung der Proben für 14 Tage bei 70 °C und 62 % relativer Feuchte), wenigstens 85°C, bevorzugt wenigstens 90°C und besonders bevorzugt wenigstens 100°C beträgt. Dies ist insbesondere deshalb von Vorteil, weil die Verwendung solcher Polyamide (a), deren Glasübergangstemperatur bei Kontakt mit Wasser nicht unter die angegebenen Temperaturgrenzen fallen, die oben erwähnten, nachteiligen elektrochemischen Vorgänge weitgehend unterdrücken können und somit im Test "Elektrische Eigenschaften bei Wasserlagerung" die Haftung zwischen Metallelement und Polyamidschicht erhalten sowie die Degradation der Polyamidschicht minimiert wird. Die Glasübergangstemperatur wird dabei anhand der ISO-Norm 11357-11-2 am Granulat bestimmt. Die Differential Scanning Calorimetry (DSC) wird dabei mit Aufheizrate von 20 °C/min durchgeführt. Für die Glasumwandlungstemperatur (Tg) wird die Temperatur für die Mittelstufe bzw. den Wendepunkt angegeben.

Dabei sind sowohl die Polyamide (a), insbesondere solange sie noch nicht mit Farbstoffen oder Pigmenten versetzt sind, bevorzugtermassen transparent im für das menschliche Auge sichtbaren Wellenlängenbereich. Transparent bedeutet hierbei, dass Formteile aus den Polyamiden der Komponente (a) allein eine hohe Lichttransmission (LT) von wenigstens 85, bevorzugt wenigstens 88% und insbesondere von mehr als 90% aufweisen. Der Wert der Lichttransmission, welche als Mass für die Transparenz verwendet wird, ist dabei im Rahmen der vorliegenden Anmeldung stets als bestimmt nach der Methode ASTM D1003 (Lichtart CIE-C) zu verstehen. Die Messung der Lichttransmission wird dabei beispielsweise auf einem Gerät mit dem Namen Haze Guard Plus der Firma BYK Gardner (DE) an Rundplatten 70 x 2mm oder Platten der Dimension 60 x 60 x 2mm durchgeführt. Der Transmissionswert wird für den sichtbaren Wellenlängenbereich definiert nach CIE-C d. h. mit wesentlichen Intensitäten ca. zwischen 400 und 770 nm, angenommen. Die Rundplatten 70 x 2mm können z. B. dafür auf einer Arburg Spritzgussmaschine im polierten Werkzeug hergestellt, wobei die Zylindertemperatur zwischen 200°C und 340°C und die Werkzeugtemperatur zwischen 20°C und 140°C liegt.

Die Polyamide der Komponente (a) haben bevorzugtermassen keine messbare oder nur sehr geringe Schmelzwärmen (Schmelzenthalpie) von höchstens 25 J/g, bevorzugt von höchstens 20 J/g, bevorzugt von höchstens 4 J/g (bestimmt gemäss ISO 11357-11-2 an Granulat, Differential Scanning Calorimetry (DSC) mit einer Aufheizrate von 20 °C/min).

Die Konzentration des cycloaliphatischen Diamins enthalten in Komponente (a) beträgt bevorzugt wenigstens 20 Mol-%, insbesondere wenigstens 40 Mol-% und besonders bevorzugt wenigstens 50 oder 60 Mol-%, bezogen auf die Summe aller in (a) enthaltenen Diamine. Besonders bevorzugt wird eine Konzentration der cycloaliphatischen Diamine im Bereich von 60 bis 100 Mol-%, bezogen auf die Summe aller Diamine von Komponente (a).

In Bezug auf Komponente (a) geeignete cycloaliphatische Diamine (**Komponente (a1))** sind solche mit 6 bis 24 Kohlenstoffatomen, wie z.B. Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethyl-cyclohexyl)-methan (TMDC), 2,6-Norbornandiamin oder 2,6-Bis-(aminomethyl)-norbornan oder 1,3-Diaminocyclohexan, 1,4-Diaminocyclohexandiamin, Isophorondiamin, 1,3-Bis-(aminomethyl)cyclohexan (BAC), 1,4-Bis-(aminomethyl)cyclohexan, 2,2-(4,4'-Diaminodicyclohexyl)propan (PACP) oder Mischungen davon. Insbesondere wird alkylsubstituiertes Bis-(aminocyclohexyl)methan oder Bis-(aminocyclohexyl)propan bevorzugt. Als Alkylsubstituenten werden lineare und/oder verzweigte C1-C6, bevorzugt C1-C4 Alkylgruppen bevorzugt, so insbesondere Methyl-, Ethyl-, Propyl-, Isopropyl- oder Butyl-Gruppen, insbesondere bevorzugt sind Methylgruppen. In einer besonders bevorzugten Ausführungsform werden als alkylsubstituiertes Bis-(aminocyclohexyl)methan das Bis-(4-amino-3-methyl-cyclohexyl)-methan (MACM) und das Bis-(4-Amino-3,5-dimethyl-cyclohexyl)-methan (TMDC) eingesetzt. Besonders bevorzugt werden die cycloaliphatischen Diamine BAC, PACM, MACM und TMDC.

Neben den cycloaliphatischen Diaminen können auch, in beschränktem Umfang, andere aliphatische und aromatische Diamine zum Aufbau der Polyamide (a) verwendet werden **(Komponente (a2)),** wie z.B. 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, m-Xylylendiamin und p-Xylylendiamin. Insbesondere bevorzugt werden unverzweigte (geradkettige) aliphatische Diamine mit 6 -12 Kohlenstoffatomen, insbesondere 1,6-Hexandiamin, 1,10-Decandiamin und 1,12-Dodecandiamin. Diese anderen Diamine innerhalb der Komponente (a) machen aber bevorzugtermassen nicht mehr als 80 Mol-% der Gesamtheit der Diamine der Komponente (a) aus, vorzugsweise machen sie nicht mehr als 60 Mol-%, insbesondere bevorzugt nicht mehr als 40 Mol-% der Gesamtheit der Diamine der Komponente (a) aus. Insbesondere bevorzugt ist die Komponente (a) im Wesentlichen frei von solchen weiteren anderen Diaminen, die nicht cycloaliphatisch sind.

Für das Polyamid (a) geeignete Dicarbonsäuren **(Komponente (a3))** sind: Adipinsäure,

Korksäure, Azelainsäure, Sebazinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, Isophthalsäure, Terephthalsäure, Naphthalindicarbonsäure, cis- und/oder trans-Cyclohexan-1,4-dicarbonsäure und/oder cis- und/oder trans-Cyolohexan-1,3-dicarbonsäure (CHDA) und Gemische daraus. Bevorzugt werden aromatische Dicarbonsäuren und geradkettige aliphatische Dicarbonsäuren. Insbesondere bevorzugt werden die Dicarbonsäuren Terephthalsäure, Isophthalsäure, Sebazinsäure sowie Dodecandisäure. Besonders bevorzugt wird ein Polyamid (a), dessen Anteil an Terephthalsäure höchstens 50 mol-%, bezogen auf die Summe aller Dicarbonsäuren von Komponente (a), beträgt. Insbesondere ist es bevorzugt, wenn der Anteil der Terephthalsäure in Komponente (a) kleiner 45 mol-% ist oder keine Terephthalsäure in Komponenten (a) enthalten ist.

Die Polyamide (a) können als weitere Monomere auch Lactame oder Aminocarbonsäuren **(Komponente (a4))** enthalten, insbesondere α,ω-Aminosäuren oder Lactame mit 6 bis 12 Kohlenstoffatome, wobei beispielhaft nachfolgende Auswahl genannt sei: m-Aminobenzoesäure, p-Aminobenzoesäure, Caprolactam (CL), α,ω-Aminocapronsäure, α,ω-Aminoheptansäure, α,ω-Aminoctansäure, α,ω-Aminononansäure, α,ω-Aminodecansäure, α,ω-Aminoundecansäure (AUA), Laurinlactam (LL) und α,ω-Aminododecansäure (ADA). Besonderes bevorzugt sind Caprolactam, α,ω-Aminocapronsäure, Laurinlactam, α,ω-Aminoundecansäure und α,ω-Aminododecansäure. Der Anteil an Lactamen oder Aminosäuren in Komponente (a4) beträgt 0 bis 50 mol-%, bevorzugt 2 - 45 mol-% und besonders bevorzugt 3 bis 35 mol-%, jeweils bezogen auf die Summe aller (a) bildender Monomere, wobei die Konzentration des cycloaliphatischen Diamins bezogen auf die alle Diamine in Komponente (a) stets mindestens 20 mol-%, bevorzugt stets mindestens 40 mol-% und besonders bevorzugt stets mindestens 60 mol-% oder mindestens 80 mol-% beträgt. Gemäss einer besonders bevorzugten Ausführungsform ist das oder sind die (vorzugsweise amorphen) Polyamide der Komponente (a) aus folgenden Bausteinen aufgebaut:
(a1) 50 bis 100 Mol-%, oder 60 bis 100 Mol-%, vorzugsweise 80-100 Gew.-%, eines cycloaliphatischen Diamins, vorzugsweise ausgewählt aus der Gruppe bestehend aus: Bis-(4-amino-3-methyl-cyclohexyl)-methan (MACM), Bis-(4-aminocyclohexyl)-methan (PACM), Bis-(4-Amino-3-ethyl-cyclohexyl)-methan (EACM), Bis-(4-Amino-3,5-dimethy-cyclohexyl)-methan (TMACM), 1,3-Bis-(aminomethyl)cyclohexan (BAC), 1,4-Bis-(aminomethyl)cyclohexan oder Mischungen davon und
(a2) 0 bis 50 Mol-% oder 0 - 40 Mol-% eines aliphatischen oder aromatischen Diamins mit 4 bis 36 Kohlenstoffatomen oder Mischungen davon,
   jeweils bezogen auf die Mol-Gesamtheit an Diaminen sowie
(a3) einer oder mehreren aliphatischen oder cycloaliphatischen Dicarbonsäure mit 4 bis 36 Kohlenstoffatomen, vorzugsweise 10 - 36 oder 6-18 Kohlenstoffatomen,
(a4) einem oder mehreren aliphatischen oder aromatischen Lactam oder Aminocarboxylsäure mit 4-36 Kohlenstoffatomen, vorzugsweise 10 - 36 oder 10-18 Kohlenstoffatomen,
wobei der Anteil an Komponente (a4) vorzugsweise 0 bis 50 Mol-%, insbesondere vorzugsweise 2-45 Mol-% und besonders bevorzugt 3 bis 35 mol-%, beträgt, jeweils bezogen auf die Summe aller (a) bildenden Monomere.

Bevorzugte Polyamide (a) auf Basis von cycloaliphatischen Diaminen sind MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC17, TMDC18 oder Copolyamide, wie z.B. MACMI/12, MACMT/12, MACMI/MACMT/12, 6I/6T/MACMI/MACMT/12, 6I/MACMI/MACMT, 6I/PACMI/PACMT, 6I/6T/MACMI, MACMI/MACM36, 12/PACMI oder 12/MACMT, 6/PACMT, 6/IPDT, 10I/10T/BACI/BACT oder Mischungen daraus,MACM9-18/PACM9-18, MACM9-18/TMDC9-18, TMDC9-18/PACM9-18 insbesondere MACM10/PACM10, MACM12/PACM12 und MACM14/PACM14 und Mischungen davon.

Bei **Komponente (b)** handelt es sich um ein Polyolefin auf Basis von C2-C12, bevorzugt C2-C8, besonders bevorzugt C2-C5 Alkenen, in verzweigter oder unverzweigter Form oder einer Mischung davon, und zusätzlich wenigstens einem Monomer ausgewählt aus der folgenden Gruppe: Maleinsäureanhydrid, Itaconsäureanhydrid, Glycidylacrylat, Glycidylmethacrylat, Acrylsäure, Methacrylsäure, Vinylacetat, C1-C12-Alkylacrylate, vorzugsweise Ethylacrylat oder Butylacrylat, C1-C12-Alkylmethacrylate, substituiertes oder unsubstituiertes Styrol, oder einer Mischung derartiger Monomere.

Das Monomer ausgewählt aus der folgenden Gruppe: Maleinsäureanhydrid, Itaconsäureanhydrid, Glycidylacrylat, Glycidylmethacrylat, Acrylsäure, Methacrylsäure, Vinylacetat, C1-C12-Alkylacrylate, vorzugsweise Ethylacrylat oder Butylacrylat, C1-C12-Alkylmethacrylate, substituiertes oder unsubstituiertes Styrol oder einer Mischung derartiger Monomere kann dabei entweder in die Hauptkette auf Basis von Polyolefin eingebaut sein, oder im Rahmen von Seitenketten, beispielsweise über eine Pfropfreaktion. Es kann sich dabei auch um Terpolymere handeln.

Die Komponente (b) basiert auf den C2-C12, bevorzugt C2-C8, besonders bevorzugt C2-C5 Alkenen, in verzweigter oder unverzweigter Form oder einer Mischung davon, und zusätzlich wenigstens einem Monomer ausgewählt aus der genannten Gruppe. Die Komponente (b) kann entsprechend auch noch weitere Monomer-Bausteine aufweisen, wiederum entweder in der Hauptkette oder über eine Propfreaktion angebunden.

Gemäss einer bevorzugten Ausführungsform ist die Komponente (b) ausschliesslich aufgebaut aus den C2-C12, bevorzugt C2-C8, besonders bevorzugt C2-C5 Alkenen, in verzweigter oder unverzweigter Form oder einer Mischung davon, und zusätzlich wenigstens einem Monomer ausgewählt aus der genannten Gruppe aus Maleinsäureanhydrid, Itaconsäureanhydrid, Glycidylacrylat, Glycidylmethacrylat, Acrylsäure, Methacrylsäure, Vinylacetat, C1-C12-Alkylacrylate, vorzugsweise Ethylacrylat oder Butylacrylat, C1-C12-Alkylmethacrylate, substituiertes oder unsubstituiertes Styrol oder einer Mischung derartiger Monomere, d.h. die Komponente (b) ist frei von weiteren anderen Comonomeren.

Wenn die Komponente (b) ausschliesslich aufgebaut ist aus den genannten Alkenen, dann bevorzugtermassen in Kombination mit zusätzlich wenigstens einem Monomer ausgewählt aus der folgenden reduzierten Gruppe: Maleinsäureanhydrid, Itaconsäureanhydrid, Glycidylacrylat, Glycidylmethacrylat, Acrylsäure, Methacrylsäure, Vinylacetat, C1-C12-Alkylacrylate, vorzugsweise Ethylacrylat oder Butylacrylat, C1-C12-Alkylmethacrylate oder eine Mischung davon. Gemäss einer weiteren Ausführungsform, die bevorzugt ist, ist die Komponente (b) dann ausschliesslich aufgebaut aus Alkenen ausgewählt aus der folgenden Gruppe: Ethen, Propen, 1-Buten, 2-Buten, 1-Penten, 2-Penten, und zusätzlich wenigstens einem Monomer ausgewählt aus der oben angegebenen reduzierten Gruppe.

Möglich und weiterhin bevorzugt sind zudem Systeme für die Komponente (b), welche ausschliesslich aufgebaut sind aus den C2-C12, bevorzugt C2-C8, besonders bevorzugt C2-C5 Alkenen, in verzweigter oder unverzweigter Form oder einer Mischung davon, und zusätzlich Styrol und zusätzlich wenigstens einem Monomer ausgewählt aus der oben angegebenen reduzierten Gruppe.

Bevorzugt liegt die Konzentration von (b) im Bereich von 10 bis 40 Gew.-%, insbesondere im Bereich von 10 bis 20 Gew.-% bezogen auf die Summe der Komponenten (a) und (b), sowie gegebenenfalls, falls vorhanden, der Komponenten (c) und/oder (d). Unterhalb von 10 Gew.-% ist die Wirkung von Komponente (b) gering, so dass die Vorteile von Komponente (b) in den Formmassen kaum zum Tragen kommen, oberhalb von 40 Gew.-% nimmt die Steifigkeit stark ab und die Formmasse lässt sich aufgrund einer zu hohen Schmelzviskosität (zu niedrige MVR-Werte) nicht mehr ausreichend gut verarbeiten.

Die Komponente (b) umfasst damit auch Polymere, die Carbonsäure-, Carbonsäureanhydrid- oder Epoxygruppen in der Seitenkette tragen. Bevorzugt werden Copolymere oder Pfropfcopolymere, aufgebaut aus Carbonsäure-, oder Carbonsäureanhydridgruppen oder Epoxygruppen enthaltenden Monomeren und mindestens einem weiteren Monomeren, wobei beide Gruppen von Monomeren mindestens eine polymerisierbare Kohlenstoff-Kohlenstoff-Doppelbindung enthalten.

Bevorzugte Epoxygruppen-enthaltende Monomere sind Glycidylacrylat und Glycidylmethacrylat. Bevorzugte Carbonsäuregruppen-enthaltende Monomere sind Acrylsäure und Methacrylsäure. Bevorzugte Carbonsäureanhydridgruppen-enthaltende Monomere sind Maleinsäureanhydrid und Itaconsäureanhydrid.

Somit werden als Komponente (b) bevorzugt Copolymere aus Glycidylacrylat und/oder Glycidylmethacrylat und mindestens einem weiteren ungesättigten Alken-Monomeren, das wenigstens eine nicht-aromatische Kohlenstoff-Kohlenstoff-Doppelbindung enthält, d.h. es handelt sich um ein olefinisch ungesättigtes Monomer, verwendet. Bevorzugtermassen ist Komponente (b) ein Copolymer aus Glycidylacrylat und/oder Glycidylmethacrylat und mindestens einem weiteren olefinisch ungesättigten Alken-Monomeren, wobei die Konzentration von Glycidylacrylat und Glycidylmethacrylat im Bereich von 5 bis 20 Gew.-%, bevorzugt im Bereich von 6 bis 16 Gew.-% und besonders bevorzugt im Bereich von 7 bis 14 Gew.-% bezogen auf das Copolymer liegt. Ist weniger als 5 Gew.-% Glycidylacrylat oder Glycidylmethacrylat im Copolymer enthalten, ist die Reaktivität von Komponente (b) in der Regel zu gering und es resultieren nicht die gewünschten mechanischen Eigenschaften. Übersteigt die Glycidylacrylat- oder Glycidylmethacrylat-Konzentration der Komponente (b) eine Konzentration von 15 Gew.-%, wird die Verarbeitbarkeit, die Oberflächengüte und die mechanischen Eigenschaften in der Regel zunehmend schlechter.

Weiterhin wird bevorzugt, wenn das weitere olefinisch ungesättigte Monomer ein einfach ungesättigtes Olefin, bevorzugt ein α-Olefin, mit 2 bis 8, insbesondere mit 2 bis 5 Kohlenstoffatomen ist. Insbesondere enthält das Copolymer (b) neben Glycidylacrylat und/oder Glycidylmethacrylat mindestens ein weiteres olefinisch ungesättigtes Alken-Monomer ausgewählt aus der Gruppe bestehend aus Ethen, Propen, 1-Buten, 2-Buten, 1-Penten, 2-Penten, oder eine Mischung davon. Als Dienmonomere im Sinne der Alken-Monomere kommen z.B. 1,3-Butadien, 2-Methyl-1,3-butadien, 2,3-Dimethyl-1,3-butadien, 1,3-Pentadien, Isopren in Frage. 1,3-Butadien und Isopren sind bevorzugt, insbesondere 1,3-Butadien (nachfolgend kurz als Butadien bezeichnet). Ebenfalls möglich sind Systeme auf Basis von Mischungen von solchen Dien-Monomeren mit Alkenen mit nur einer Doppelbindung.

Besonders bevorzugt ist die Komponente (b) ein Copolymer aus Glycidylmethacrylat und Ethen sowie gegebenenfalls weiteren olefinisch ungesättigten Alken-Monomeren, wobei bevorzugtermassen der Gehalt an Ethen im Bereich von 50 bis 95 Gew.-%, bevorzugt im Bereich von 65 bis 93 Gew.-% und besonders bevorzugt im Bereich von 80 - 95 oder 85 bis 94 liegt.

Konkrete Beispiele sind Copolymere aus Ethylen und Glycidylacrylat; Ethylen und Glycidylmethacrylat; Ethylen, Methylmethacrylat und Glycidylmethacrylat; Ethylen, Methylacrylat und Glycidylmethacrylat; Ethylen, Ethylacrylat und Glycidylmethacrylat; Ethylen, Butylacrylat und Glycidylmethacrylat; Ethylen, Vinylacetat und Glycidylmethacrylat.

Besonders bevorzugt werden folgende Copolymere für die Komponente (b):
- aus Ethylen und Glycidylmethacrylat mit einem Gehalt an Glycidylmethacrylat von 7 bis 14 Gew.-% bezogen auf die Summe aller Monomere im Copolymer;
- aus 71 - 88 Gew.-% Ethylen, 5 - 15 Gew.-% Vinylacetat und 7 - 14 Gew.-% Glycidylmethacrylat bezogen auf die Summe aller Monomere im Copolymer;
- aus 56 - 73 Gew.-% Ethylen, 20 - 30 Gew.-% Methylacrylat und 7 - 14 Gew.-% Glycidylmethacrylat bezogen auf die Summe aller Monomere im Copolymer;
- aus 51 - 78 Gew.-% Ethylen, 15 - 35 Gew.-% Butylacrylat und 7 - 14 Gew.-% Glycidylmethacrylat bezogen auf die Summe aller Monomere im Copolymer.

Generell gesprochen handelt es sich also bevorzugtermassen bei Komponente (b) um ein Copolymer aus Glycidylacrylat und/oder Glycidylmethacrylat und mindestens einem weiteren ungesättigten Alken-Monomeren mit wenigstens einer Kohlenstoff-Kohlenstoff-Doppelbindung, wobei die Konzentration von Glycidylacrylat, Glycidylmethacrylat oder der Mischung davon bevorzugtermassen im Bereich von 5 bis 15 Gew.-%, bevorzugt im Bereich von 7 bis 14 Gew.-%, bezogen auf die Summe aller Monomere im Copolymer, liegt. Das weitere ungesättigte Monomer kann dabei ein einfach ungesättigtes Olefin sein, bevorzugt ein α-Olefin, mit 2 bis 5 Kohlenstoffatomen, und die Komponente (b) kann zusätzlich als Baustein ein Styrol unter Einschluss seiner Derivate aufweisen.

Gemäß einer ganz bevorzugten Ausführungsform handelt es sich bei Komponente (b) um ein Copolymer aus Glycidylmethacrylat und Ethen sowie gegebenenfalls weiteren olefinisch ungesättigten Alken-Monomeren, wobei der Gehalt an Alken, vorzugsweise Ethen, im Bereich von 50 bis 95 Gew.-%, bevorzugt im Bereich von 65 bis 93 Gew.-% liegt.

Vorzugsweise liegt bei Komponente (b) der Schmelze-Massefliessrate (melt flow rate, MFR) bestimmt nach ISO 1133 bei 190°C und einer Auflage von 2.16 kg im Bereich von 2-20 g/10 min, bevorzugtermassen im Bereich von 3-15 g/10 min.

Besonders bevorzugte Beispiele für erfindungsgemäss einsetzbare Komponenten (b) die von Arkema unter dem Produktnamen Lotader AX erhältlichen Systeme, insbesondere vom Typ (AX8840 Copolymer aus 92% Ethen und 8% Glycidylmethacrylat) oder vom Typ AX8900 (Copolymer aus 67% Ethen, 25% Methylacrylat und 8% Glycidylmethacrylat). Ebenfalls bevorzugt sind Produkte vom Typ Elvaloy von Dupont, insbesondere Elvaloy PTW (Copolymer aus 67% Ethen, 28% Butylacrylat und 5% Glycidylmethacrylat), sowie Produkte vom Typ Igetabond erhältlich von Sumitomo, insbesondere Igetabond E (Copolymer aus 88% Ethen und 12% Glycidylmethacrylat).

Bei Komponente (b) handelt es sich weiterhin bevorzugt um Copolymere oder Pfropfcopolymere, die ungesättigte Carbonsäuren, Dicarbonsäuren oder Carbonsäureanhydride als Monomer enthalten, d.h. dass entweder diese Carbonsäuren, Dicarbonsäuren oder Carbonsäureanhydride mit weiteren Comonomeren zum Copolymer (b) polymerisiert oder dass eine Pfropfgrundlage auf Basis anderer Monomere durch Pfropfung mit ungesättigten Carbonsäuren, Dicarbonsäuren oder Carbonsäureanhydriden modifiziert wurde. Im Folgenden wird Komponente (b) deshalb auch als MAHmodifizierter Schlagzähmodifikator oder kurz als MAH-SZM bezeichnet.

Weitere Beispiele für solche Copolymere oder Pfropfcopolymere, die als Bestandteil der Komponente (b) Einsatz finden können oder Komponente (b) als Ganzes bilden, sind ein Polybutadien, Polyisopren, Polyisobutylen, ein Mischpolymerisat des Butadiens und/oder Isoprens mit Styrol oder Styrolderivaten und anderen Comonomeren, ein hydriertes Mischpolymerisat und oder ein Mischpolymerisat, das durch Pfropfen oder Copolymerisation mit Säureanhydriden, (Meth)acrylsäure und deren Ester entstanden ist. Das der Komponente (b) zugrundeliegende Copolymer kann auch ein Pfropfkautschuk mit einem vernetzten elastomeren Kern, der aus Butadien, oder Isopren besteht und eine Pfropfhülle aus Polystyrol hat, ein unpolares oder polares Olefinhomo- und Copolymeres wie Ethylen-Propylen-, Ethylen-Propylen-Dien-Kautschuk oder ein unpolares oder polares Olefinhomo- und Copolymeres, das durch Pfropfen oder Copolymerisation mit Säureanhydriden, (Meth)acrylsäure und deren Ester entstanden ist, sein. Der Copolymer kann auch ein carbonsäure-funktionalisiertes Copolymeres wie Poly(ethen-co-(meth)acrylsäure) oder Poly(ethen-co-1-olefin-co-(meth)acrylsäure) sein, wobei das 1-Olefin ein Alken oder ein ungesättigter (Meth)acrylsäureester mit mehr als 4 Atomen ist, einschliesslich solchen Copolymeren, in denen die Säuregruppen teilweise mit Metallionen neutralisiert sind.

Bevorzugte Copolymere auf Basis von Styrolmonomeren (Styrol und Styrolderivate) sind Blockcopolymere aufgebaut den alkenylaromatischen Verbindungen und einem Alken, vorzugsweise konjungierten Dien, sowie hydrierte Blockcopolymere aus der alkenylaromatischen Verbindung und Alkenen, vorzugsweise konjungierten Dienen, oder Kombinationen dieser SZM-Typen. Das Blockcopolymer enthält mindestens einen Block abgeleitet von der alkenylaromatischen Verbindung und wenigstens einem Block abgeleitet von einem Alken, vorzugsweise konjungierten Dien. Bei den hydrierten Blockcopolymeren wurde der Anteil an aliphatisch ungesättigten Kohlenstoff-KohlenstoffDoppelbindungen durch Hydrierung reduziert. Als Blockcopolymere sind Zwei-, Drei-, Vier- und Polyblockcopolymere mit linearer Struktur geeignet. Jedoch sind verzweigte und sternförmige Strukturen ebenfalls erfindungsgemäss einsetzbar. Verzweigte Blockcopolymere erhält man in bekannter Weise, z.B. durch Pfropfreaktionen von polymeren "Seitenästen" auf eine Polymer-Hauptkette.

Als alkenylaromatische Monomere können neben oder in Mischung mit Styrol, auch vinylaromatische Monomere verwendet werden, die am aromatischen Ring und/oder an der C=C-Doppelbindung mit C1-20 oder C1-C10-Kohlenwasserstoffresten oder Halogenatomen substituiert sind.

Beispiele für alkenylaromatische Monomere unter dem Begriff substituiertes oder unsubstituiertes Styrol sind vorzugsweise unsubstituiertes Styrol, p-Methylstyrol, α-Methylstyrol, Ethylstyrol, tert.-Butylstyrol, Bromstyrole, Chlorstyrole, sowie Kombinationen davon. Bevorzugt werden unsubstituiertes Styrol, p-Methylstyrol, alpha-Methylstyrol, Ethylstyrol, tert.-Butylstyrol, oder deren Mischungen. Besonders bevorzugt wird Styrol eingesetzt.

Bevorzugt verwendet man als alkenylaromatisches Monomer Styrol und als Alken, vorzugsweise Dienmonomer, Butadien, d.h. bevorzugt ist das Styrol-Butadien-Blockcopolymer. In der Regel werden die Blockcopolymere durch anionische Polymerisation in an sich bekannter Weise hergestellt.

Weiterhin kann man zusätzlich zu den Styrol- und Dienmonomeren weitere Comonomere mitverwenden. Der Anteil der Comonomeren beträgt bevorzugt 0 bis 50, besonders bevorzugt 0 bis 30 und insbesondere 0 bis 15 Gew.-%, bezogen auf die Gesamtmenge der eingesetzten Monomeren. Geeignete Comonomere sind z.B. Acrylate, insbesondere C1-12-Alkylacrylate wie n-Butylacrylat oder 2-Ethylhexylacrylat, und die entsprechenden Methacrylate, insbesondere C1-12-Alkylmethacrylate wie Methylmethacrylat (MMA). Weitere mögliche Comonomere sind (Meth)acrylnitril, Glycidyl(meth)acrylat, Vinylmethylether, Dially- und Divinylether bifunktioneller Alkohole, Divinylbenzol und Vinylacetat. C1-12-Alkylacrylate und C1-12-Alkylmethacrylate werden zusammengefasst als Cl-12-Alkyl(meth)acrylate benannt.

Zusätzlich zum konjugierten Dien enthalten die hydrierten Blockcopolymere gegebenenfalls noch Anteile an niederen Kohlenwasserstoffen wie z.B. Ethylen, Propylen, 1-Buten, Dicyclopentadien oder nicht-konjugierte Diene. In den hydrierten Blockcopolymeren ist der Anteil der nicht reduzierten aliphatischen ungesättigten Bindungen, kleiner 50%, bevorzugt kleiner 25%, insbesondere kleiner 10%. Die aromatischen Anteile werden maximal zu 25% reduziert. Die hydrierten Blockcopolymere Styrol-(ethylen-butylen)- oder Styrol-(ethylen-proplyen)-Zweiblock und Styrol-(ethylen-butylen)-styrol-Dreiblock-Copolymere werden durch Hydrierung von Styrol-butadien- und Styrol-butadien-styrol-Copolymeren erhalten.

Die Blockcopolymere bestehen bevorzugt zu 20 bis 90 Gew.-% aus aromatischem Block, insbesondere zu 50 bis 85 Gew.-% aus aromatischem Block. Das Dien kann in 1,2- oder in 1,4-Orientierungen in den Anteil aus konjugiertem Dien eingebaut werden.

Die Molmasse der Komponente (b), vorzugsweise in Form von Blockcopolymeren, beträgt 5'000 bis 500'000 g/mol, bevorzugt 20'000 bis 300'000 g/mol, insbesondere 40'000 bis 200'000 g/mol.

Geeignete hydrierte Blockcopolymere sind die kommerziell erhältlichen Produkte, wie z.B. KRATON® (Kraton Polymers) G1650, G1651, und G1652 sowie TUFTEC® (Asahi Chemical) H1041, H1043, H1052, H1062, H1141 und H1272.

Beispiele für nicht-hydrierte Blockcopolymere sind Polystyrol-polybutadien, Polystyrol-poly(ethyen-propylen), Polystyrol-polyisopren, Poly(a-methyl-styrol)-polybutadien, Polystyrol-polybutadien-polystyrol (SBS), Polystyrol-Poly(ethylene-propylen)-polystyrol, Polystyrol-polyisopren-polystyrol und Poly(a-methylstyrol-polybutadiene-poly(a-methylstyrol), als auch Kombinationen davon.

Geeignete nicht-hydrierte Blockcopolymere, die kommerziell erhältlich sind, sind verschiedene Produkte mit dem Markennamen SOLPRENE® (Phillips), KRATON® (Shell), VECTOR® (Dexco) und SEPTON® (Kuraray).

Gemäss einer weiteren bevorzugten Ausführungsform sind die erfindungsgemässen Formmassen dadurch gekennzeichnet, dass die Komponente (b) ein Polyolefinhomopolymeres oder ein Ethylen-α-Olefin-Copolymeres, insbesondere bevorzugt ein EP- und/oder EPDM-Elastomer (Ethylen-Propylen-Kautschuk respektive Ethylen-Propylen-Dien-Kautschuk), enthält. So kann es sich beispielsweise um ein Elastomer handeln, welches basiert auf einem Ethylen-C3-12-α-Olefin-Copolymer mit 20 bis 96, bevorzugt 25 bis 85 Gew.-% Ethylen, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und es sich insbesondere bevorzugt bei der Komponente (b) um einen gepfropften Ethylen-Propylen- oder Ethylen-Butylen-Kautschuk und/oder LLDPE und/oder VLDPE handelt.

Zusätzlich (beispielsweise in Mischung) kann (b) ein Terpolymeres auf Basis von Ethylen-C3-12-α-Olefin mit einem unkonjugierten Dien enthalten, wobei dieses bevorzugtermassen 25 bis 85 Gew.-% Ethylen und bis maximal im Bereich von 10 Gew.-% eines unkonjugierten Diens enthält, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und/oder wobei das unkonjugierte Dien bevorzugt ausgewählt ist aus der Gruppe Bicyclo(2.2.1)heptadien, Hexadien-1.4, Dicyclopentadien und/oder insbesondere 5-Ethylidennorbornen.

In Frage als Bestandteil für die Komponente (b) kommen zudem auch Ethylen-AcrylatCopolymere, die die weiteren Monomere als Comonomer enthalten.

Weitere mögliche Formen als Bestandteile für die Komponente (b) sind die Ethylen-Propylen-Copolymere und Ethylen-Butylen-Copolymere beziehungsweise Mischungen (Blends), welche derartige Systeme enthalten.

Alle oben beschriebenen Copolymere (b) können über die genannten Bestandteile hinaus zusätzlich über Bestandteile mit Dicarbonsäureanhydrid-, Dicarbonsäure- oder Dicarbonsäuremonoalkylester-Gruppen in einer Konzentration, die für eine gute Anbindung an das Polyamid (a) ausreicht, enthalten.

Diese Bestandteile mit Dicarbonsäureanhydrid-, Dicarbonsäure- oder CarbonsäureGruppen werden entweder in einer Pfropfreaktion an das Hauptkettenpolymer gepfropft, wobei weitere Monomere bei der Pfropfreaktion zugegen sein können, oder durch Copolymerisation von einem ungesättigten Dicarbonsäureanhydrid, einer ungesättigten Dicarbonsäure oder einem ungesättigten Dicarbonsäuremonoalkylester mit anderen Monomeren, wie sie oben genannt wurden, in den MAH-SZM eingebracht, wobei dafür Reagenzien ausgewählt aus der folgenden Gruppe bevorzugtermassen eingesetzt werden:
Maleinsäure, Maleinsäureanhydrid, Maleinsäuremonobutylester, Fumarsäure, Aconitsäure und/oder Itaconsäureanhydrid. Vorzugsweise werden 0.1 bis 5.0 Gew.-% eines ungesättigten Anhydrids an die Schlagzähkomponente als Bestandteil von (b) aufgepfropft oder das ungesättigte Dicarbonsäureanhydrid oder dessen Vorstufe wird zusammen mit einem weiteren ungesättigten Monomeren aufgepfropft. Generell ist der Pfropfgrad bevorzugtermassen in einem Bereich von 0.2-3.0%, insbesondere bevorzugt in einem Bereich von 0.3-2.0%. Auch möglich als Bestandteil der Komponente (b) ist eine Mischung aus einem Ethylen-Propylen-Copolymer und einem Ethylen-Butylen-Copolymer, dies bevorzugt mit einem Maleinsäureanhydrid-Pfropfgrad (MAH-Propfgrad) im Bereich von 0.3-0.9%.

Die oben angegebenen möglichen Systeme für die Komponente (b) können auch in Mischungen verwendet werden.

Weiterhin kann die Komponente (b) über weitere Bestandteile verfügen, welche über funktionelle Gruppen, wie z.B. Epoxy-, Oxazolin-, Carbodiimid-, Isocyanat-, Silanol- und Carboxylat-Gruppen verfügen, oder Kombinationen von zwei oder mehrerer der genannten funktionellen Gruppen enthalten. Monomere, die diese funktionellen Gruppen tragen, können durch Co-Polymerisation oder Pfropfung an das elastomere Polyolefin gebunden werden.

Ausserdem können die SZM auf Basis der Olefinpolymere auch zusätzlich durch Pfropfung mit einer ungesättigten Silanverbindung, z. B. Vinyltrimethoxysilan, Vinyltriethoxysilan, Vinyltriacetosilan, Methacryloxypropyltrimethoxysilan oder Propenyltrimethoxysilan modifiziert sein.

Die elastomeren Polyolefine sind statistische, alternierende oder segmentierte Copolymere mit linearer, verzweigter oder Core-Shell-Struktur und enthalten funktionelle Gruppen, die mit den Endgruppen der Polyamide reagieren können, so dass eine ausreichende Verträglichkeit zwischen Polyamid und SZM resultiert.

Die erfindungsgemässen SZM schliessen damit Homopolymere oder Copolymere von Olefinen, wie z.B. Ethylen, Propylen, Buten-1, oder Copolymere von Olefinen und copolymerisierbaren Monomeren, wie Vinylacetat, (Meth)acrylsäureester und Methylhexadien, ein, die MAH in der Seitenkette (durch Pfropfreaktion) oder in der Hauptkette (durch Copolymerisation) enthalten.

Beispiele für kristalline Olefinpolymere sind niedrig-, mittel- und hochdichte Polyethylene, Polypropylen, Polybutadien, Poly-4-methylpenten, Ethylen-Propylen-Block- oder statistische Copolymere, Ethylen-Methylhexadien-Copolymere, Propylen-Methylhexadien-Copolymere, Ethylen-Propylen-Buten-Copolymere, Ethylen-Propylen-Hexen-Copolymere, Ethylen-Propylen-Methylhexadien-Copolymere, Poly(ethylen-vinylacetat) (EVA), Poly(ethylen-ethylacrylat) (EEA), Ethylen-Octen-Copolymer, Ethylen-Buten-Copolymer, Ethylen-Hexen-Copolymer, Ethylene-Propylen-Dien-Terpolymere sowie Kombinationen der genannten Polymere.

Beispiele für kommerziell erhältliche Schlagzähmodifier, welche im Rahmen der Bestandteile der Komponente (b) eingesetzt werden können, sind:
TAFMER MC201: g-MAH (0.6 %) Blend aus 67% EP Copolymer (20 Mol-% Propylen) + 33 % EB Copolymer (15mol-% Buten-1)): Mitsui Chemicals, Japan.
TAFMER MH5010: g-MAH (0.6 %) Ethylen-Butylen-Copolymer; Mitsui.
TAFMER MH7010: g-MAH (0.7 %) Ethylen-Butylen-Copolymer; Mitsui.
TAFMER MH7020: g-MAH (0.7 %) EP-Copolymer, Mitsui.
EXXELOR VA1801: g-MAH (0.7 %) EP-Copolymer; Exxon Mobile Chemical, US.
EXXELOR VA1803: g-MAH (0.5-0.9 %) EP Copolymer, amorph,, Exxon.
EXXELOR VA1810: g-MAH (0.5 %) EP-Copolymer, Exxon
EXXELOR MDEX 94-11: g-MAH (0.7 %) EPDM, Exxon.
FUSABOND MN493D: g-MAH (0.5 %) Ethylen-Octen-Copolymer, DuPont, US.
FUSABOND A EB560D (g-MAH) Ethylen-n-butyl-acrylat-copolymer, DuPont. ELVALOY, DuPont.

Bevorzugt wird auch ein Ionomer, in welchem die polymergebundenen Carboxylgruppen ganz oder teilweise durch Metallionen miteinander verbunden sind.

Besonders bevorzugt sind durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)arylsäure) oder Poly(ethen-co-1-olefin-co-(meth)acrylsäure), in denen die Säuregruppen teilweise mit Metallionen neutralisiert sind.

Bevorzugtermassen liegt dabei bei Komponente (b) der Anteil an C2-C12 Akenen, in verzweigter oder unverzweigter Form, oder einer Mischung davon, vorzugsweise der Anteil an Ethylen, Propylen, Butylen, oder einer Mischung davon, (als Summe betrachtet bei Mischung) im Bereich von 50-95 Gew.-%, vorzugsweise im Bereich von 65 bis 93 Gew.-%, und besonders bevorzugt im Bereich von 80 - 95 Gew.-%, oder 85 bis 94 Gew.-%, wobei insbesondere vorzugsweise nur Ethylen vorliegt.

Gemäss einer anderen bevorzugten Ausführungsform liegt bei Komponente (b) der Anteil an C2-C3 Alkenen, oder einer Mischung davon (als Summe betrachtet bei Mischung) im Bereich von 50-95 Gew.-%, vorzugsweise im Bereich von 65 bis 93 Gew.-%, und besonders bevorzugt im Bereich von 80 - 95 Gew.-%, oder 85 bis 94 Gew.-% (wobei in diesem Fall längerkettige Alkene zusätzlich anwesend sein können aber eben nicht den genannten Gewichtsprozenten hinzugerechnet werden, da diese nur Ethylen und Propylen berücksichtigen).

Weiterhin enthält die vorgeschlagene Polyamidformmasse zur Beschichtung des Metallelements optional die genannte **Komponente (c)** aus einem aliphatischen Polyamid, verschieden vom Polyamid (a). Bevorzugt beruhen die Polyamide (c) nicht auf cycloaliphatischen Diaminen und/oder cycloaliphatischen Dicarbonsäuren. Diese Komponente ist bevorzugtermassen ausgewählt aus der folgenden Gruppe: Polyamid 6, Polyamid 10, Polyamid 12, Polyamid 1212, Polyamid 1012, Polyamid 1210, Polyamid 46, Polyamid 66, Polyamid 612, Polyamid 126, Polyamid 106, Polyamid 610, Polyamid 1010, Polyamid 614, Polyamid 618, Polyamid 1014, Polyamid 1018, Polyamid 1214, Polyamid 1218 sowie Copolyamide oder Mischungen hiervon.

Bevorzugtermassen handelt es sich bei der Komponente (c) um ein aliphatischen Polyamid, dessen Kettenlänge der Kettenlänge der Diamine und/oder Dicarboxylsäuren der Komponente (a) angepasst ist. Bevorzugtermassen handelt es sich beispielsweise, wenn Komponente (a) ausgewählt ist als MACM12 und/oder MACMI/12 bei Komponente (c) um Polyamid 12, wobei dieses beispielsweise in einem Gewichtsanteil von 10-20 Gew.-% vorliegen kann.

Des weiteren kann die vorgeschlagene Polyamidformmasse zur Beschichtung des Metallelements die Komponente (d) enthalten. Bei dieser handelt es sich bevorzugtermassen um ein Additiv ausgewählt aus der folgenden Gruppe: UV-Stabilisatoren, Hitzestabilisatoren, Radikalfänger, Antioxidantien, Verarbeitungshilfsstoffe, Einschlussverhinderer, Gleitmittel, Entformungshilfsstoffe, Weichmacher, Antistatika, Füllstoffe wie insbesondere partikuläre Füllstoffe einschliesslich nanoskalige Füll- und/oder Zuschlagsstoffe, sowie faserförmige Füllstoffe, insbesondere Glasfasern, Flammschutzmittel, insbesondere halogenfreie Flammschutzmittel, Farbstoffe, Pigmente, Residuen aus Polymerisationsverfahren wie Katalysatoren, Salze und deren Derivate, oder Mischungen davon.

Bevorzugtermassen enthält die Polyamidformmasse zur Beschichtung des Metallelements kein Flammschutzmittel auf Basis von rotem Phosphor oder Magnesiumhydroxid. Bevorzugte Phosphor-haltige Flammschutzmittel sind Metallphosphinate, insbesondere Calcium-, Aluminium- oder Zinkphosphinate, die gegebenenfalls in Kombination mit Synergisten, wie z.B. Melamincyanurat eingesetzt werden können.

Gemäss einer weiteren bevorzugten Ausführungsform ist das Metallelement der Schichtstruktur aus einem Metall ausgewählt aus der folgenden Gruppe: Aluminium, Kupfer, Silber, Zink, Eisen, Stahl, oder Mischungen respektive Legierungen davon. Die Oberfläche kann dabei aktiv oder passiv oxidiert und/oder galvanisiert sein.

Insbesondere betrifft die vorliegende Erfindung Schichtstrukturen mit folgenden Aufbauten:
Metallelement / Polyamidschicht;
Metallelement / Polyamidschicht / weitere Schicht;
wobei die genannte weitere Schicht wenigstens zu 50 Gew.-% auf einer thermoplastischen Formmasse beruht, die von der Polyamidformmasse verschieden ist, und wobei auf der dem Metallelement abgewandten Seite zusätzlich noch weitere Schichten angeordnet sein können. Das Metallelement ist dabei um den Umfang vollständig durch die Polyamidschicht bedeckt. Die Polyamidschicht ist unmittelbar angrenzend und ohne zusätzliche haftvermittelnde Schicht auf dem Metallelement anliegend ausgebildet. Direkt anliegend schliesst auch Situationen ein, bei welchen das Metallelement an der Oberfläche eine Oxidschicht aufweist, wie auch Situationen, bei welchen das Metallelement ohne Oxidschicht direkt an die Polyamidschicht grenzt.

Gemäss der vorliegenden Erfindung handelt es sich beim Metallelement um ein endloses Metallprofil, vorzugsweise in Form eines Drahtes oder Flachleiters, der über den ganzen Umfang von der Polyamidschicht aussenseitig abgedeckt ist. Der Leiter kann dabei auch ein Hohlleiter sein.

Insbesondere bevorzugtermassen handelt es sich bei einem solchen Leiter um einen elektrischen Leiter, bei welchem bevorzugtermassen die Dicke der Polyamidschicht, gemessen senkrecht zur Hauptverlaufsrichtung des Leiters, im Bereich von 0.1-2 mm, vorzugsweise im Bereich von 0.25-0.75 mm liegt. Die Ader eines solchen Leiters verfügt typischerweise, im Fall eines zylindrischen Drahtes, über einen Durchmesser im Bereich von 0.2-6 mm vorzugsweise im Bereich von 0.2-4 mm. Im Falle eines Flachleiters verfügt dieser typischerweise über eine Breite im Bereich von 10-30 mm und eine Dicke im Bereich von 2-8 mm.

Bevorzugtermassen handelt es sich bei der Schichtstruktur um eine elektrische Leitung für Kraftfahrzeuge im Niedervoltbereich, respektive betrifft die vorliegende Erfindung die Verwendung einer solchen Schichtstruktur für derartige Zwecke. Dies bedeutet, dass der elektrische Leiter dazu vorgesehen ist respektive verwendet wird, um bei Gleichstrom eine Spannung von höchstens 60V zu transportieren respektive bei Wechselstrom eine Spannung von höchstens 42V. Besonders bevorzugte Anwendungen der Schichtstruktur respektive Ausbildungen der Schichtstruktur sind: Batteriekabel für Kraftfahrzeuge und Batterie-Pluskabel.

Zudem betrifft die vorliegende Erfindung ein Verfahren zur Herstellung einer Schichtstruktur, wie sie oben dargestellt wurde, welches dadurch gekennzeichnet ist, dass das Metallelement in Form eines Endlosprofils, insbesondere in Form eines Drahtes oder Flachleiters, in einem Extrusionsprozess, um den ganzen Umfang des Metallelements, mit der Polyamidschicht beschichtet wird, vorzugsweise indem das von Rolle zugeführte Endlosprofil mit dem Material der Polyamidschicht gemeinsam durch eine Extrusionsdüse geführt wird. Vorgängig zur Extrusionsbeschichtung wird das Metallelement zu Verbesserung der Haftung zur Polyamidschicht vorzugsweise mit Hilfe von Reinigungsbädern, welche Lösungsmittel und/oder saure oder alkalische wässrige Lösungen enthalten können, gereinigt und entfettet, danach getrocknet und auf eine Temperatur im Bereich von 130 bis 250°C, bevorzugt 150 bis 230°C, insbesondere bevorzugt auf 170 bis 220°C vorgeheizt. Das Erwärmen des Metallelementes erfolgt dabei bevorzugt mit Heissluft, Beflammung oder Mikrowellen (Hochfrequenzvorwärumg).

Es handelt sich entsprechend bevorzugtermassen bei der Polyamidschicht nicht um eine Folie oder einen Schlauch, die respektive der beispielsweise vor der Verbindung mit dem Metallelement separat hergestellt wird und eine selbsttragende Struktur bildet, und anschliessend auf das Metallelement unter Verwendung eines Haftvermittlers oder durch teilweises aufschmelzen, aufweichen oder schrumpfen direkt oder indirekt aufgebracht wird.

Zudem betrifft die vorliegende Erfindung die Verwendung einer Polyamidformmasse in Form einer Mischung, bestehend aus folgenden Komponenten:
(a) ein amorphes Polyamid in der beanspruchten Proportion auf Basis cycloaliphatischer Diamine, cycloaliphatischer Dicarbonsäuren, oder sowohl cycloaliphatischer Diamine als auch cycloaliphatischer Dicarbonsäuren, oder eine Mischung derartiger amorpher Polyamide, mit einer Glasübergangstemperatur (Tg) von wenigstens 130 °C;
(b) in der beanspruchten Proportion ein Polyolefin auf Basis von C2-C5 Akenen, in verzweigter oder unverzweigter Form, Styrol, oder einer Mischung davon, und zusätzlich
   wenigstens einem Monomer ausgewählt aus der folgenden Gruppe: Maleinsäureanhydrid, Glycidylacrylat, Glycidylmethacrylat, Acrylsäure, Methacrylsäure, oder einer Mischung derartiger Monomere;
(c) in der beanspruchten Proportion ein aliphatisches Polyamid verschieden von (a) oder eine Mischung derartiger Polyamide;
(d) in der beanspruchten Proportion Additive;
   mit der Massgabe, dass der Anteil an Komponenten (c) und (d) auch null sein kann, und mit der Massgabe, dass die Summe der Komponenten (a)-(d) 100 Gew.-% ausmacht,
zur Erzeugung einer Polyamidschicht auf einem Metallelement in Form eines Endlosprofils und ohne Haftvermittler, insbesondere zur Herstellung eines mit der Polyamidschicht isolierten elektrischen Leiters. Die weiteren Spezifikationen der Komponenten (a)-(c), wie sie oben im Zusammenhang mit der Mehrschichtstruktur dargestellt sind, gelten gleichermassen und analog auch für die von der Erfindung umfasste Verwendung. Auch hier geht es nicht darum, dass in einem ersten Schritt die Polyamidschicht als selbsttragende Folie oder als selbsttragender Schlauch hergestellt und anschliessend mit dem Metallelement verbunden wird. Es handelt sich also nicht darum, die Polyamidschicht als Folie oder Schlauch zu verwenden, sondern es geht darum, die Polyamidformmasse direkt aus der schmelzflüssigen Phase auf das Metallelement aufzubringen (Extrusion, Tauchbad, etc.). Es geht also bevorzugtermassen um Verwendungen, bei welchen die Polyamidschicht *in situ* auf dem Metallelement erzeugt wird, was dann wiederum eine optimale Haftung gewährleistet und dies bevorzugt ohne die Verwendung eines Haftvermittlers oder einer haftvermittelnden Zwischenschicht.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: einen zentralen Längsschnitt entlang der Linie X-X gemäss Figur 2a durch einen elektrischen Leiter;
- Fig. 2: Schnitte senkrecht zur Hauptverlaufsrichtung von elektrischen Leitern, wobei in a) ein Schnitt durch einen elektrischen Leiter mit kreisrunder Ader und ohne Zwischenschicht, in b) ein Schnitt durch einen elektrischen Leiter mit kreisrunder Ader und Zwischenschicht, und in c) ein Schnitt durch einen Flachleiter ohne Zwischenschicht dargestellt ist

### BESCHREIBUNG BEVORZUGTER AUSFÜHRUNGSFORMEN

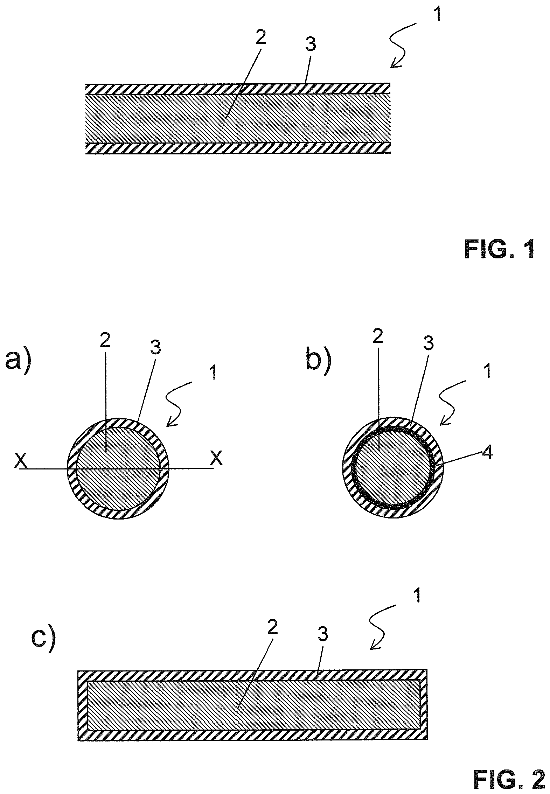

Zur Dokumentation der vorteilhaften Eigenschaften der Mehrschichtstruktur nach der vorliegenden Erfindung wurden Strukturen aufgebaut, wie sie schematisch in den Figuren 1 und 2 dargestellt sind. Figur 1 zeigt dabei einen Schnitt parallel zur Verlaufsrichtung eines zylindrischen elektrischen Leiters 1 (Schnitt entlang der Linie X-X in Figur 2a). Der Leiter verfügt über eine zentrale Ader 2 aus Aluminium mit einem Durchmesser von in diesem Fall 4 mm. Die Mantelfläche dieses elektrischen Metallleiters umgebend und direkt an diese Mantelfläche angrenzend befindet sich um den ganzen Umfang herum eine Polyamidschicht 3, die in diesem Fall eine Dicke von 0.5 mm aufweist.

In Figur 2a ist von einem solchen Leiter Einschnitt senkrecht zur Verlaufsrichtung dargestellt, dabei ist die kreisrunde Querschnittsfläche der Ader 2 erkennbar. Ebenfalls ist erkennbar, wie die Polyamidschicht den gesamten Umfang umschliesst.

Alternativ ist es möglich, dass zwischen der Polyamidschicht 3 und der zentralen Ader 2 eine weitere Schicht 4 angeordnet ist. Es kann sich dabei um eine Galvanisierung oder eine aktiv erzeugte Oxidschicht handeln. Diese Situation ist in der Schnittdarstellung gemäss Figur 2b dargestellt.

Grundsätzlich kann die Ader 2 eine beliebige Querschnittsfläche aufweisen. So sind beispielsweise auch quadratische Querschnittsflächen oder ovale Querschnittsflächen denkbar. In Figur 2c ist die weitere Möglichkeit einer rechteckigen Querschnittsfläche dargestellt, in Form eines sogenannten flachen Leiters. Hier ist üblicherweise die Breite des Leiters 10 bis 20 mm und die Höhe 3 bis 5 mm. Für die Lagerung in NaCl-Lösung unter Spannung wird ein Flachleiter aus Aluminium mit einer Querschnittsfläche des Metalls von 14 x 4.1 mm eingesetzt, die Dicke der isolierenden Polyamidschicht beträgt ca. 0.5 mm.

Zu Testzwecken wurden Leiter wie folgt hergestellt:
Ein kompakter Aluminiumdraht mit 4,0 mm Durchmesser bzw. ein Aluminium-Flachleiterprofil der Dimension 14 x 4.1 mm jeweils aus Reinaluminium (A1 99,5) wurde vorgängig zur Ummantelung entfettet und getrocknet. Anschliessend wurden die Aluminiumleiter durch Beflammen oder Mikrowellen erwärmt und mit den Polyamid-Varianten auf einer Drahtummantelungsanlage (NOUA oder ROUA) mit einer Schichtstärke von 0,5 mm extrusionsbeschichtet. Tabelle 1 fasst die Parameter zur Extrusionsbeschichtung zusammen.

Der im Querschnitt runde Aluminiumdraht (Durchmesser 4 mm) wurde mit einer Nokia Cable Machinery SCL - 20 Anlage (NOUA) ummantelt, die wie folgt ausgestattet war:
Extruder: MPP30-24D-305
Schneckendurchmesser 30 mm, Schneckenkänge L/D 25:1
Extrusionskopf: Nokia Cable Machinery Querspritzkopf NXH 3, Düsendurchmesser 10,0 mm, Kerndurchmesser 6,0 mm
Kühlbad Wassertemperatur 30°C, Abstand Düse zu Kühlbad 85 cm
Leitervorwärmung durch Beflammung mit Ringflammdüse, Propan-Sauerstoffbrenner.

Für die Ummantelung des im Querschnitt flachen Aluminiumprofils (14 x 4.1 mm) wurde eine Rosendahl Ummantelungsanlage (ROUA) für elektrische Leitungen eingesetzt, die wie folgt ausgestattet war:
Extruder: ROEX 60/24D
Schneckendurchmesser 60mm, Schneckenlänge L/D 25:1
Extrusionskopf: Rosendahl RX Querspritzkopf mit Bypass;
Druckummantelung: Das Aluminiumprofil wird innerhalb des Düsenkanals mit der Schmelze ummantelt.
Hochfrequenzvorwärmung (Mikrowellen-Vorwärmung)
Kühlbad Wassertemperatur 15°C.

**Tabelle 1**

| | Temperatur Extruderzonen [°C] | Temperatur Kopf/Düse [°C] | Abzugsgeschwindigkeit [m/min] | Vorwärmung Aluminiumleiter [°C] |
|---|---|---|---|---|
| B1, B2 auf NOUA | 240 - 270 | 270 | 5 | 170 und 200 |
| B1, B2 auf ROUA | 240 - 270 | 270 | 25 | 217 |
| VB1, VB2 auf NOUA | 230 - 240 | 240 | 5 | 170 und 200 |
| VB1, VB2 auf ROUA | 220 - 240 | 235 | 25 | 175 |

Der Aufbau und die gemessenen Eigenschaften der resultierenden Leiter in den einschlägigen Tests sind in der folgenden Tabelle (Tabelle 2) zusammengefasst:

| **Komponenten** | **Einheit** | **B1** | **B2** | **VB1** | **VB2** |
|---|---|---|---|---|---|
| P-1 | Gew.-% | 87.6 | | | |
| P-2 | Gew.-% | | 68.5 | | |
| P-3 | Gew.-% | | 16 | 100 | 80 |
| P-4 | Gew.-% | 12.4 | | | |
| P-5 (Surlyn) | Gew.-% | | 15.5 | | |
| P-6 | Gew-% | | | | 20 |
| MVR (275°C/5kg) | cm³/10 min | 18 | 28 | | |

| Zugversuch an Isozugstäben | | | | | |
|---|---|---|---|---|---|
| Zug-E-Modul | MPa | 1300 | 1450 | 1500 | 1000 |
| Bruchfestigkeit | MPa | 45 | 44 | 55 | 43 |
| Bruchdehnung | % | 120 | 120 | 280 | 240 |
| Schlagzähigkeit 23°C | kJ/m² | o.B. | o.B. | o.B. | o.B. |
| Kerbschlagzähigkeit 23°C | kJ/m2 | 56 | 47 | 5 | 75 |

| Zugversuch an Folien | | | | | |
|---|---|---|---|---|---|
| E-Modul | MPa | 1400 | 1410 | 1030 | ng |
| Streckspannung | MPa | 48 | 47 | 36 | ng |
| Bruchspannung | MPa | 58 | 57 | 60 | ng |
| Reissdehnung | % | 130 | 160 | 290 | ng |
| | | | | | |
| Biegeversuch nach 3000h bei 125°C, 5 mm Biegeradius | | kV | kV | kV | kV |
| Leiterfestsitz (A1 4 mm) Vorwärmung: 170°C | | o | n | o | o |
| Leiterfestsitz (A1 4 mm) Vorwärmung: 200°C | | o | o | h | h |
| Lagerung in NaCl-Lösung unter Spannung (48 V), 85°C, 1000 h | | bestanden | bestanden | Nicht bestanden | Nicht bestanden |
| Spannungsfestigkeit 1 min, 1000 V | | Kein Durchschlag | Kein Durchschlag | Nicht bestanden | Nicht bestanden |

| | | | | | |
|---|---|---|---|---|---|
| kV: keine Veränderung an der Oberfläche mit dem Auge erkennbar, insbes. keine Rissbildung ng: nicht gemessen | | | | | |

| | |
|---|---|
| o: optimale | Kraft zum Abziehen der Isolierung (Ummantelung) gemäss LV112-1 (Elektrische Leitungen für Kraftfahrzeuge) und ISO 6722-1 (7.2) |
| n: zu niedrige | |
| h: zu hohe | |

Es wurden dabei folgende **Materialien** eingesetzt:

| | |
|---|---|
| P-1 | Polyamid MACM12, Glasübergangstemperatur Tg (trocken) von 154°C, Tg (nach Konditionierung gemäss ISO 1110) von 108°C, ηᵣₑₗ = 1.8, ΔHm < 4 J/g. |
| P-2 | Polyamid MACMI/12 mit einem LC12-Anteil von 34 Gew.-%, Tg (trocken) = 155°C, Tg (nach Konditionierung gemäss ISO 1110) von 112°C, ηᵣₑₗ = 1.8, ΔHm < 4 J/g. |
| P-3 | Polyamid 12, Tm = 178°C, ηᵣₑₗ = 1.96 |
| P-4 | Lotader AX 8840 (Ethylen-co-GMA, statistisches Copolymer aus 92% Ethylen und 8% Glycidylmethacrylat), Schmelzpunkt: 109°C, Shorehärte: A 92, Arkema (France) |
| P-5 | Surlyn 9320, Ethylen-, Acrylsäure Copolymer 9-12 % Methacrylsäure teilweise mit Zink-Ionen neutralisiert, Dupont, USA. |
| P-6 | Tafmer MC-201, Mischung aus EP- und EB-Copolymer (67/33) mit MAH (0.6%) gepfropft, MFR (230°C 2.16kg): 1.3g/10min. Dichte: 0.88 g/cm³. Shorehärte: A 73, Mitsui, Japan. |

Die **Messungen** wurden nach folgenden Normen und an folgenden Prüfkörpern durchgeführt.

Der **Zug-E-Modul** wurde nach ISO 527 mit einer Zuggeschwindigkeit von 1 mm/min, die **Streckspannung,** die **Bruchfestigkeit** und die **Bruchdehnung** wurden bestimmt gemäss ISO 527 mit einer Zuggeschwindigkeit von 50 mm/min bei einer Temperatur von 23 °C, wobei als Probekörper ein ISO-Zugstab , Norm: ISO/CD 3167, Typ Al, 170 x 20/10 x 4 mm, verwendet wurde.

**Zugversuch an Folien** wurde gemäss ISO 527-3 an aus Folien ausgestanzten Probekörpern (längs zur Extrusionsrichtung) mit einer Prüfgeschwindigkeit von 100 mm/min bei 23°C durchgeführt. Die Probenkörper hatten eine Dicke von 0.5 mm und eine Querschnittsbreite von 6.2 mm. Vorgängig zur Zugprüfung wurden die ausgestanzte Prüfkörper 14 Tage bei 20°C und 50% relativer Feuchte gelagert.

**Schlagzähigkeit und Kerbschlagzähigkeit** nach Charpy wurden nach ISO 179 am ISO-Prüfstab, Norm: ISO/CD 3167, Typ B1, 80 x 10 x 4 mm bei Temperatur 23 °C gemessen. Das **thermische Verhalten** (Schmelztemperatur (Tm), Schmelzenthalpie (ΔHm), Glasumwandlungstemperatur (Tg)) wurde anhand der ISO-Norm 11357-11-2 am Granulat bestimmt. Die Differential Scanning Calorimetry (DSC) wurde mit Aufheizrate von 20 °C/min durchgeführt. Für die Glasumwandlungstemperatur (Tg) wird die Temperatur für die Mittelstufe bzw. den Wendepunkt angegeben.

Die **relative Viskosität** (ηᵣₑₗ) wurde gemäss DIN EN ISO 307 anhand von 0,5 Gew.-%-igen m-Kresollösungen bei 20 °C gemessen. Als Probe wird Granulat verwendet.

Der **MVR** (Melt volume-flow rate) wird nach ISO 1133 bei 275°C und einer Belastung von 5 kg am Granulat bestimmt.

**Elektrische Eigenschaften bei Wasserlagerung:** Der gemäss ISO 6722-1 bestimmte Isolationswiderstand während der Wasserlagerung (Konzentration von Natriumchlorid in Wasser: 1 Gew.-%) muss mindestens 10⁹ Ωmm betragen. Dieser Wert wird alle 7 Tage gemessen. Der längenbezogene Leiterwiderstand darf max. 10% vom Ausgangswert abweichen. Weiterhin dürfen keine Risse in der Isolationsschicht auftreten und die Farbe der Isolierung muss nach dem Test noch erkennbar sein.

Ein Prüfling mit einem Leiterquerschnitt von 14 x 4.1 mm und ausreichender Länge (2.5 m) wird in 10 Windungen mittig auf einen Dorn mit einem Durchmesser von 125 mm gewickelt. Die Prüfleitung wird 25 mm an jedem Ende abisoliert und der Dorn entfernt. Der Prüfling wird am Pluspol einer 48 V Gleichstromquelle angeschlossen und für 1000 Stunden in der Salzlösung bei 85± 5 °C in einem Prüfgefäss aus Glas so gelagert, dass ca. 2 m des Prüflings vollständig eingetaucht sind. Der Minuspol wird an eine Kupferelektrode mit einer Oberfläche von 100 cm² angeschlossen. Das Prüfgefäss, befüllt mit 2-5 Liter der Natriumchloridlösung, wird extern über ein Temperierbad gleichmässig beheizt. Es ist darauf zu achten, dass sich der Prüfling und die Kupferelektrode nicht berühren. Unmittelbar nach der Wasserlagerung werden die Prüflinge einem Spannungsfestigkeitstest (1 kV, 1 Minute) unterzogen.

**Biegeversuch nach Hitzelagerung:** Ein ummantelter Aluminiumdraht mit 4 mm Durchmesser und einer Ummantelung von 0.5 mm (Aussendurchmesser: 5 mm) wird für 3000 Stunden bei 125°C im Umluftofen gelagert. Nach Abkühlen wird der so behandelte Aluminiumdraht über mehrere Wicklungen auf einen 10 mm Dorn (Radius: 5 mm) gebogen. Die Ummantelung wird anschliessend einer optischen Kontrolle hinsichtlich Rissbildung oder sonstigen Veränderungen unterzogen.

### Leiterfestsitz:

Bei Leitungen, die abzuisolieren sind, müssen mindestens 20 mm der Isolierung sauber und ohne Schwierigkeiten mit handelsüblichen Geräten entfernbar sein. Die zum Abziehen der Isolierung mit einer Länge vom 50 ± 1 mm benötigten Kräfte müssen innerhalb der in der LV 112-1 (Elektrische Leitungen für Kraftfahrzeuge) angegebenen bzw. mit dem Leitungshersteller vereinbarten Grenzen liegen. Die Probe wird bis auf eine Länge von 50 ± 1 mm abisoliert und das abisolierte Leiterende durch ein Blech mit einer Bohrung von Leiterdurchmesser + 0.1 mm mit einer Abziehgeschwindigkeit von 100 mm/min gezogen. Zur Bestimmung des Leiterfestsitzes wird der ummantelte Aluminiumdraht mit rundem Querschnitt und einem Leiter-Durchmesser von 4 mm verwendet. Liegt die so bestimmte Abziehkraft innerhalb der oben genannten Grenzen wird der Leiterfestsitz in Tabelle 2 mit optimal (o), liegt sie darunter mit zu niedrig (n) oder liegt sie darüber mit zu hoch (h) angegeben.

### Diskussion der Resultate:

Der elektrische Leiter bestehend aus Aluminium und einer Polyamid-Schicht gemäss der Beispiele B1 und B2 bestehen mit dem aufgeführten Versuchsaufbau die Heisswasserlagerung mit 1% Natriumchlorid (NaCl) bei 85°C unter einer Gleichspannung von 48 Volt über 1000 Stunden. Der anschliessende Spannungsdurchschlagtest mit 1000 V über 1 Minute wird in den Beispielen B1 und B2 ebenfalls bestanden. Dies ist bei üblichen Polyamid 12-Formassen wie beispielsweisse gearbeitet in den Vergleichsbeispielen VB1 und VB2 nicht der Fall. Die mechanischen Anforderungen an das Isolationsmaterial im Hinblick auf Anwendungen in Kraftfahrzeugen werden von den Formmassen der Beispiele B1 und B2 erfüllt, insbesondere werden im Biegetest nach Langzeitwäremelagerung keine Rissbildung oder sonstige oberflächliche Veränderungen beobachtet und bei einer Vorwärmung des Metallelementes auf 200°C wird ein optimaler Leiterfestsitz erzielt.

**BEZUGSZEICHENLISTE**

| | | | |
|---|---|---|---|
| 1 | elektrischer Leiter | 3 | Polyamidschicht |
| 2 | metallische Schicht, Ader | 4 | Zwischenschicht |

## Patentansprüche

1. Schichtstruktur (1) mit wenigstens einem Metallelement (2) in Form eines Endlosprofils, und einer in einem Extrusionsprozess um den ganzen Umfang des Metallelements auf diesem angeordneten Polyamidschicht (3), wobei die Polyamidschicht (3) unmittelbar angrenzend und ohne zusätzliche haftvermittelnde Schicht auf dem Metallelement (2) anliegt, **dadurch gekennzeichnet, dass**
die Polyamidschicht (3) aus einer Polyamidformmasse besteht, die eine Mischung ist, bestehend aus folgenden Komponenten:
(a) 60-90 Gew.-% eines Polyamids auf Basis cycloaliphatischer Diamine, cycloaliphatischer Dicarbonsäuren, oder sowohl cycloaliphatischer Diamine als auch cycloaliphatischer Dicarbonsäuren, oder eine Mischung derartiger Polyamide, mit einer Glasübergangstemperatur (T_{g}) von wenigstens 130 °C;
(b) 10-40 Gew.-% eines Polyolefins auf Basis von
C2-C12 Alkenen, in verzweigter oder unverzweigter Form, oder einer Mischung davon, und zusätzlich
wenigstens einem Monomer ausgewählt aus der folgenden Gruppe: Maleinsäureanhydrid, Itaconsäureanhydrid, Glycidylacrylat, Glycidylmethacrylat, Acrylsäure, Methacrylsäure, Vinylacetat, C1-C12-Alkylacrylate, C1-C12-Alkylmethacrylate, substituiertes oder unsubstituiertes Styrol, oder einer Mischung derartiger Monomere;
(c) 0-20 Gew.-% eines aliphatischen Polyamids verschieden von (a) oder eine Mischung derartiger Polyamide;
(d) 0-25 Gew.-% Additive;
mit der Massgabe, dass der Anteil an Komponenten (c) und (d) auch null sein kann, und mit der Massgabe, dass die Summe der Komponenten (a)-(d) 100 Gew.-% ausmacht.

2. Schichtstruktur (1) nach Anspruch 1, **dadurch gekennzeichnet, dass** die Polyamidformmasse eine Mischung der genannten Komponenten (a)-(d) ist mit folgenden Anteilen:
(a) 65-90 Gew.-% eines Polyamids auf Basis cycloaliphatischer Diamine, cycloaliphatischer Dicarbonsäuren, oder sowohl cycloaliphatischer Diamine als auch cycloaliphatischer Dicarbonsäuren, oder eine Mischung derartiger Polyamide, mit einer Glasübergangstemperatur (T_{g}) von wenigstens 130 °C;
(b) 10-20 Gew.-% eines Polyolefins auf Basis von
C2-C12 Alkenen, bevorzugt C2-C8 oder C2-C5 Alkenen, in verzweigter oder unverzweigter Form, oder einer Mischung davon und zusätzlich wenigstens einem Monomer ausgewählt aus der folgenden Gruppe: Maleinsäureanhydrid, Itaconsäureanhydrid, Glycidylacrylat, Glycidylmethacrylat, Acrylsäure, Methacrylsäure, Vinylacetat, C1-C12-Alkylacrylate, C1-C12-Alkylmethacrylate, substituiertes oder unsubstituiertes Styrol, oder einer Mischung derartiger Monomere;
(c) 10-20 Gew.% eines aliphatischen Polyamids verschieden von (a) oder eine Mischung derartiger Polyamide;
(d) 0.1-5 Gew.-% Additive;
mit der Massgabe, dass die Summe der Komponenten (a)-(d) 100 Gew.-% ausmacht.

3. Schichtstruktur (1) nach einem der vorhergehenden Ansprüche, **dadurch gekennzeichnet, dass** das oder die Polyamide der Komponente (a) aus folgenden Bausteinen aufgebaut ist:
(a1) 50 bis 100 Mol-%, 60 - 100 Mol-%, oder 80-100 Gew.-%, eines cycloaliphatischen Diamins, vorzugsweise ausgewählt aus der Gruppe bestehend aus: Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethy-cyclohexyl)-methan (TMACM), 1,3-Bis-(aminomethyl)cyclohexan (BAC), 1,4-Bis-(aminomethyl)cyclohexan oder Mischungen davon und
(a2) 0 bis 50 Mol-% oder 0 - 40 Mol-% eines aliphatischen oder aromatischen Diamins mit 4 bis 36 Kohlenstoffatomen oder Mischungen davon,
jeweils bezogen auf die Mol-Gesamtheit an Diaminen sowie
(a3) einer oder mehreren aliphatischen oder cycloaliphatischen Dicarbonsäure mit 4 bis 36 Kohlenstoffatomen, vorzugsweise 8-18 Kohlenstoffatomen,
(a4) einem oder mehreren aliphatischen oder aromatischen Lactam oder Aminocarboxylsäure mit 4-36 Kohlenstoffatomen, vorzugsweise 10-18 Kohlenstoffatomen,
wobei der Anteil an Komponente (a4) vorzugsweise 0 bis 50 Mol-%, insbesondere vorzugsweise 2-45 Mol-% und besonders bevorzugt 3 bis 35 mol-%, beträgt, jeweils bezogen auf die Summe aller (a) bildenden Monomere.

4. Schichtstruktur (1) nach einem der vorhergehenden Ansprüche, **dadurch gekennzeichnet, dass** es sich bei Komponente (a) um ein Polyamid ausgewählt aus folgender Gruppe handelt: MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC17, TMDC18, MACMI/12, MACMT/12, MACMI/MACMT/12, 6I/6T/MACMI/MACMT/12, 6I/MACMI/MACMT, 6I/PACMI/PACMT, 6I/6T/MACMI, MACMI/MACM36, 12/PACMI, 12/MACMT, 6/PACMT, 6/IPDT, 10I/10T/BACI/BACT, MACM9-18/PACM9-18, MACM9-18/TMDC9-18, TMDC9-18/PACM9-18, insbesondere MACM10/PACM10, MACM12/PACM12 und MACM14/PACM14, oder Mischungen davon.

5. Schichtstruktur (1) nach einem der vorhergehenden Ansprüche, **dadurch gekennzeichnet, dass** bei Komponente (b) der Anteil an C2-C12 Alkenen, bevorzugt an C2-C8 Alkenen, in verzweigter oder unverzweigter Form, oder einer Mischung davon, vorzugsweise der Anteil an Ethylen, Propylen, Butylen, oder einer Mischung davon, im Bereich von 50-95 Gew.-%, oder 65 bis 93 Gew.-%, oder 80 - 95 Gew.-%, oder 85 bis 94 Gew.-%, liegt, wobei insbesondere vorzugsweise nur Ethylen vorliegt
oder dass bei Komponente (b) der Anteil an C2-C3 Alkenen, oder einer Mischung davon, im Bereich von 50-95 Gew.-%, oder von 65 bis 93 Gew.-%, oder von 80 - 95 Gew.-% liegt.

6. Schichtstruktur (1) nach einem der vorhergehenden Ansprüche, **dadurch gekennzeichnet, dass** die Komponente (b) als Polyolefin ausgewählt ist aus folgender Gruppe:
Polyolefin aus Ethylen und Glycidylmethacrylat, vorzugsweise mit einem Gehalt an Glycidylmethacrylat von 7 bis 14 Gew.-% bezogen auf die Summe aller Monomere im Copolymer;
Polyolefin aus Ethylen, Vinylacetat, sowie Glycidylmethacrylat, vorzugsweise 71 - 88 Gew.-% Ethylen, 5 - 15 Gew.-% Vinylacetat und 7 - 14 Gew.-% Glycidylmethacrylat bezogen auf die Summe aller Monomere im Copolymer;
Polyolefin aus Ethylen, Methylacrylat, und Glycidylmethacrylat, vorzugsweise 56 - 73 Gew.-% Ethylen, 20 - 30 Gew.-% Methylacrylat und 7 - 14 Gew.-% Glycidylmethacrylat bezogen auf die Summe aller Monomere im Copolymer;
Polyolefin aus Ethylen, Butylacrylat, Glycidylmethacrylat, vorzugsweise 51 - 78 Gew.-% Ethylen, 15 - 35 Gew.-% Butylacrylat und 7 - 14 Gew.-% Glycidylmethacrylat bezogen auf die Summe aller Monomere im Copolymer;
oder eine Mischung aus solchen Polyolefinen.

7. Schichtstruktur (1) nach einem der vorhergehenden Ansprüche, **dadurch gekennzeichnet, dass** die Komponente (c) ausgewählt ist aus der folgenden Gruppe: Polyamid 6, Polyamid 10, Polyamid 12, Polyamid 1212, Polyamid 1012, Polyamid 1210, Polyamid 46, Polyamid 66, Polyamid 612, Polyamid 126, Polyamid 106, Polyamid 610, Polyamid 1010, Polyamid 614, Polyamid 618, Polyamid 1014, Polyamid 1018, Polyamid 1214, Polyamid 1218 sowie Copolyamide oder Mischungen davon.

8. Schichtstruktur (1) nach einem der vorhergehenden Ansprüche, **dadurch gekennzeichnet, dass** die Komponente (d) ausgewählt ist aus der folgenden Gruppe: UV-Stabilisatoren, Hitzestabilisatoren, Radikalfänger, Antioxidantien, Verarbeitungshilfsstoffe, Einschlussverhinderer, Gleitmittel, Entformungshilfsstoffe, Weichmacher, Antistatika, Füllstoffe wie insbesondere partikuläre Füllstoffe einschliesslich nanoskalige Füll- und/oder Zuschlagsstoffe, sowie faserförmige Füllstoffe, insbesondere Glasfasern, Flammschutzmittel, insbesondere halogenfreie Flammschutzmittel, Farbstoffe, Pigmente, Residuen aus Polymerisationsverfahren wie Katalysatoren, Salze und deren Derivate oder Mischungen davon.

9. Schichtstruktur (1) nach einem der vorhergehenden Ansprüche, **dadurch gekennzeichnet, dass** das Metallelement aus einem Metall ausgewählt aus der folgenden Gruppe besteht: Aluminium, Kupfer, Silber, Zink, Eisen, Stahl, oder Mischungen respektive Legierungen davon, wobei die Oberfläche oxidiert und/oder galvanisiert sein kann.

10. Schichtstruktur (1) nach einem der vorhergehenden Ansprüche, **dadurch gekennzeichnet, dass** die Schichtstruktur eine der folgenden Aufbauten aufweist:
Metallelement (2) / Polyamidschicht (3);
Metallelement (2) / Polyamidschicht (3) / weitere Schicht;
wobei die genannte weitere Schicht wenigstens zu 50 Gew.-% auf einer thermoplastischen Formmasse beruht, die von der Polyamidformmasse (3) verschieden ist, und wobei auf der dem Metallelement (2) abgewandten Seite zusätzlich noch weitere Schichten angeordnet sein können.

11. Schichtstruktur (1) nach einem der vorhergehenden Ansprüche, **dadurch gekennzeichnet, dass** es sich beim Metallelement (2) um ein Metallprofil in Form eines Drahtes oder Flachleiters handelt, der über den ganzen Umfang von der Polyamidschicht (3) abgedeckt ist.

12. Schichtstruktur (1) nach Anspruch 11, **dadurch gekennzeichnet, dass** es sich um einen elektrischen Leiter handelt, bei welchem die Dicke der Polyamidschicht (3), gemessen senkrecht zur Hauptverlaufsrichtung des Leiters, im Bereich von 0.1-2 mm, oder im Bereich von 0.25-0.75 mm liegt.

13. Schichtstruktur (1) nach einem der vorhergehenden Ansprüche, **dadurch gekennzeichnet, dass** die Komponente (b) ausschliesslich aufgebaut ist
aus C2-C12, oder C2-C8, oder C2-C5 Alkenen, in verzweigter oder unverzweigter Form oder einer Mischung davon, und
zusätzlich wenigstens einem Monomer ausgewählt aus der Gruppe: Maleinsäureanhydrid, Itaconsäureanhydrid, Glycidylacrylat, Glycidylmethacrylat, Acrylsäure, Methacrylsäure, Vinylacetat, Cl-C12-Alkylacrylate, C1-C12-Alkylmethacrylate, substituiertes oder unsubstituiertes Styrol, oder einer Mischung derartiger Monomere,
vorzugsweise zusätzlich einem Monomer ausgewählt aus der folgenden reduzierten Gruppe: Maleinsäureanhydrid, Itaconsäureanhydrid, Glycidylacrylat, Glycidylmethacrylat, Acrylsäure, Methacrylsäure, Vinylacetat, C1-C12-Alkylacrylate.

14. Verfahren zur Herstellung einer Schichtstruktur nach einem der vorhergehenden Ansprüche, **dadurch gekennzeichnet, dass** das Metallelement (2) in Form eines Endlosprofils, insbesondere in Form eines Drahtes oder Flachleiters, in einem Extrusionsprozess, um den ganzen Umfang des Metallelements (2) mit der Polyamidschicht (3) beschichtet wird, wobei die Polyamidschicht (3) unmittelbar angrenzend und ohne zusätzliche haftvermittelnde Schicht auf dem Metallelement (2) anliegt, vorzugsweise indem das von Rolle zugeführte Endlosprofil mit dem Material der Polyamidschicht (3) gemeinsam durch eine Extrusionsdüse geführt wird.

15. Verwendung einer Polyamidformmasse in Form einer Mischung, bestehend aus folgenden Komponenten:
(a) 60-90 Gew.-% eines Polyamids auf Basis cycloaliphatischer Diamine, cycloaliphatischer Dicarbonsäuren, oder sowohl cycloaliphatischer Diamine als auch cycloaliphatischer Dicarbonsäuren, oder eine Mischung derartiger Polyamide, mit einer Glasübergangstemperatur (T_{g}) von wenigstens 130 °C;
(b) 10-40 Gew.-% eines Polyolefins auf Basis von
C2-C12 Alkenen, vorzugsweise C2-C8 oder C2-C5 Alkenen, in verzweigter oder unverzweigter Form, einer Mischung davon, und zusätzlich
wenigstens einem Monomer ausgewählt aus der folgenden Gruppe: Maleinsäureanhydrid, Itaconsäureanhydrid, Glycidylacrylat, Glycidylmethacrylat, Acrylsäure, Methacrylsäure, Vinylacetat, C1-C12-Alkylacrylate, C1-C12-Alkylmethacrylate, substituiertes oder unsubstituiertes Styrol, oder einer Mischung derartiger Monomere;
(c) 0-20 Gew.-% eines aliphatischen Polyamids verschieden von (a) oder eine Mischung derartiger Polyamide;
(d) 0-25 Gew.-% Additive;
mit der Massgabe, dass der Anteil an Komponenten (c) und (d) auch null sein kann, und mit der Massgabe, dass die Summe der Komponenten (a)-(d) 100 Gew.-% ausmacht,
zur Erzeugung einer Polyamidschicht (3) auf einem Metallelement (2) in Form eines Endlosprofils um den ganzen Umfang des Metallelements in einem Extrusionsprozess, wobei die Polyamidschicht (3) unmittelbar angrenzend und ohne zusätzliche haftvermittelnde Schicht auf dem Metallelement (2) anliegt insbesondere zur Herstellung eines mit der Polyamidschicht (3) isolierten elektrischen Leiters.

## Claims

1. Layer structure (1) having at least one metal element (2) in the form of a continuous profile and a polyamide layer (3) produced in an extrusion process arranged around the whole circumference of the metal element (2), wherein the polyamide layer (3) is located immediately adjacent and without any adhesion promoting layer on the metal element (2),
**characterized in that**
the polyamide layer (3) consists of a polyamide moulding composition which is a mixture consisting of the following components:
(a) 60-90 wt.-% of a polyamide based on cycloaliphatic diamines, cycloaliphatic dicarboxylic acids, or both cycloaliphatic diamines and cycloaliphatic dicarboxylic acids, or a mixture of such polyamides, having a glass transition temperature (T_{g}) of at least 130°C;
(b) 10-40 wt.-% of a polyolefine based on
C2-C12 alkenes, in branched or unbranched form, or a mixture thereof, and additionally
at least one monomer selected from the following group: maleic anhydride, itaconic anhydride, glycidyl acrylate, glycidyl methacrylate, acrylic acid, methacrylic acid, vinyl acetate, C1-C12 alkyl acrylates, C1-C12 alkyl methacrylates, substituted or unsubstituted styrene or a mixture of such monomers;
(c) 0-20 wt.-% of an aliphatic polyamide different from (a), or a mixture of such polyamides;
(d) 0-25 wt.-% of additives;
with the proviso that the fraction of components (c) and (d) may also be zero, and with the proviso that the sum of the components (a)-(d) makes 100 wt%.

2. Layer structure (1) according to Claim 1, **characterized in that** the polyamide moulding composition is a mixture of the stated components (a)-(d) with the following fractions:
(a) 65-90 wt%, of a polyamide based on cycloaliphatic diamines, cycloaliphatic dicarboxylic acids, or both cycloaliphatic diamines and cycloaliphatic dicarboxylic acids, or a mixture of such polyamides, having a glass transition temperature (T_{g}) of at least 130°C;
(b) 10-20 wt%, of a polyolefin based on
C2-C12 alkenes, preferably C2-C8 or C2-C5 alkenes, in branched or unbranched form, or a mixture thereof and additionally
at least one monomer selected from the following group: maleic anhydride, itaconic anhydride, glycidyl acrylate, glycidyl methacrylate, acrylic acid, methacrylic acid, vinyl acetate, C1-C12 alkyl acrylates, C1-C12 alkyl methacrylates, substituted or unsubstituted styrene or a mixture of such monomers;
(c) 10-20 wt%, of an aliphatic polyamide different from (a), or a mixture of such polyamides;
(d) 0.1-5 wt%, of additives;
with the proviso that the sum of the components (a)-(d) makes 100 wt%.

3. Layer structure (1) according to either of the preceding claims, **characterized in that** the polyamide or polyamides of component (a) is or are composed of the following building blocks:
(al) 50 to 100 mol%, 60 -100 mol%, or 80-100 wt%, of a cycloaliphatic
diamine, preferably selected from the group consisting of: bis(4-amino-3-methylcyclohexyl)methane (MACM), bis(4-aminocyclohexyl)methane (PACM), bis(4-amino-3-ethylcyclohexyl)methane (EACM), bis(4-amino-3,5-dimethylcyclohexyl)methane (TMACM), 1,3-bis(aminomethyl)cyclohexane (BAC), 1,4-bis(aminomethyl)cyclohexane or mixtures thereof and
(a2) 0 to 50 mol% or 0 - 40 mol% of an aliphatic or aromatic diamine having 4 to 36 carbon atoms, or mixtures thereof,
based in each case on the molar entirety of diamines, and
(a3) one or more than one aliphatic or cycloaliphatic dicarboxylic acid having 4 to 36 carbon atoms, preferably 8-18 carbon atoms,
(a4) one or more than one aliphatic or aromatic lactam or aminocarboxylic acid having 4-36 carbon atoms, preferably 10-18 carbon atoms,
the fraction of component (a4) being preferably 0 to 50 mol%, especially preferably 2-45 mol% and more preferably 3 to 35 mol%, based in each case on the sum of all monomers forming (a).

4. Layer structure (1) according to any of the preceding claims, **characterized in that** component (a) comprises a polyamide selected from the following group: MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC17, TMDC18, MACMI/12, MACMT/12, MACMI/MACMT/12, 6I/6T/MACMI/MACMT/12, 6I/MACMI/MACMT, 6I/PACMI/PACMT, 6I/6T/MACMI, MACMI/MACM36, 12/PACMI, 12/MACMT, 6/PACMT, 6/IPDT, 10I/10T/BACI/BACT, MACM9-18/PACM9-18, MACM9-18/TMDC9-18, TMDC9-18/PACM9-18, more particularly MACM10/PACM10, MACM12/PACM12 and MACM14/PACM14, or mixtures thereof.

5. Layer structure (1) according to any of the preceding claims, **characterized in that** in component (b) the fraction of C2-C12 alkenes, preferably of C2-C8 alkenes, in branched or unbranched form, or a mixture thereof, preferably the fraction of ethylene, propylene, butylene, or a mixture thereof, is in the range of 50-95 wt%, or from 65 to 93 wt%, or 80 - 95 wt%, or 85 to 94 wt%, and especially preferably only ethylene is present,
or **in that** in component (b) the fraction of C2-C3 alkenes, or a mixture thereof, is in the range of 50-95 wt%, or in the range from 65 to 93 wt%, or of 80 - 95 wt%.

6. Layer structure (1) according to any of the preceding claims, **characterized in that** component (b) as polyolefin is selected from the following group:
polyolefin of ethylene and glycidyl methacrylate, preferably with a glycidyl methacrylate content of 7 to 14 wt%, based on the sum of all monomers in the copolymer;
polyolefin of ethylene, vinyl acetate and glycidyl methacrylate, preferably 71 - 88 wt% ethylene, 5-15 wt% vinyl acetate and 7 - 14 wt% glycidyl methacrylate, based on the sum of all monomers in the copolymer;
polyolefin of ethylene, methyl acrylate and glycidyl methacrylate, preferably 56 - 73 wt% ethylene, 20 - 30 wt% methyl acrylate and 7 - 14 wt% glycidyl methacrylate, based on the sum of all monomers in the copolymer;
polyolefin of ethylene, butyl acrylate and glycidyl methacrylate, preferably 51 - 78 wt% ethylene, 15 - 35 wt% butyl acrylate and 7 - 14 wt% glycidyl methacrylate, based on the sum of all monomers in the copolymer;
or a mixture of such polyolefins.

7. Layer structure (1) according to any of the preceding claims, **characterized in that** component (c) is selected from the following group: polyamide 6, polyamide 10, polyamide 12, polyamide 1212, polyamide 1012, polyamide 1210, polyamide 46, polyamide 66, polyamide 612, polyamide 126, polyamide 106, polyamide 610, polyamide 1010, polyamide 614, polyamide 618, polyamide 1014, polyamide 1018, polyamide 1214, polyamide 1218 and also copolyamides or mixtures thereof.

8. Layer structure (1) according to any of the preceding claims, **characterized in that** component (d) is selected from the following group: UV stabilizers, heat stabilizers, radical scavengers, antioxidants, processing aids, inclusion inhibitors, lubricants, mould-release auxiliaries, plasticizers, antistats, fillers such as, in particular, particulate fillers, including nanoscale fillers and/or adjuvants, and also fibrous fillers, especially glass fibres, flame retardants, especially halogen-free flame retardants, dyes, pigments, residuals from polymerization processes such as catalysts, salts and derivatives thereof or mixtures thereof.

9. Layer structure (1) according to any of the preceding claims, **characterized in that** the metal element consists of a metal selected from the following group: aluminium, copper, silver, zinc, iron, steel, or mixtures and/or alloys thereof, it being possible for the surface to be in oxidized and/or galvanized form.

10. Layer structure (1) according to any of the preceding claims, **characterized in that** the layer structure has one of the following constructions:
metal element (2)/polyamide layer (3);
metal element (2)/polyamide layer (3)/further layer;
where the stated further layer is based to an extent of at least 50 wt% on a thermoplastic moulding composition which is different from the polyamide moulding composition (3), and where further layers may additionally be disposed on the side remote from the metal element (2).

11. Layer structure (1) according to any of the preceding claims, **characterized in that** the metal element (2) comprises a metal profile, in the form of a wire or flat conductor, which is covered over its entire extent by the polyamide layer (3).

12. Layer structure (1) according to Claim 11, **characterized in that** it comprises an electrical conductor, wherein the thickness of the polyamide layer (3), measured perpendicularly to the direction of principal extent of the conductor, is in the range of 0.1-2 mm, or in the range of 0.25-0.75 mm.

13. Layer structure (1) according to any of the preceding claims, **characterized in that** component (b) is composed exclusively
of C2-C12, or C2-C8, or C2-C5 alkenes, in branched or unbranched form, or a mixture thereof, and
additionally of at least one monomer selected from the following group: maleic anhydride, itaconic anhydride, glycidyl acrylate, glycidyl methacrylate, acrylic acid, methacrylic acid, vinyl acetate, C1-C12 alkyl acrylates, C1-C12 alkyl methacrylates, substituted or unsubstituted styrene, or a mixture of such monomers,
preferably additionally of a monomer selected from the following reduced group: maleic anhydride, itaconic anhydride, glycidyl acrylate, glycidyl methacrylate, acrylic acid, methacrylic acid, vinyl acetate, C1-C12 alkyl acrylates.

14. Method for producing a layer structure according to any of the preceding claims, **characterized in that** the metal element (2) is coated with the polyamide layer (3) around the entire extent of the metal element (2), said metal element (2) being in the form of a continuous profile, more particularly in the form of a wire or flat conductor, in an extrusion process, wherein the polyamide layer (3) is located immediately adjacent and without any adhesion promoting layer on the metal element (2), preferably by the roller-supplied continuous profile being guided together with the material of the polyamide layer (3) through an extrusion die.

15. Use of a polyamide moulding composition in the form of a mixture consisting of the following components:
(a) 60-90 wt.-% of a polyamide based on cycloaliphatic diamines, cycloaliphatic dicarboxylic acids, or both cycloaliphatic diamines and cycloaliphatic dicarboxylic acids, or a mixture of such polyamides, having a glass transition temperature (T_{g}) of at least 130°C;
(b) 10-40 wt.-% of a polyolefine based on
C2-C12 alkenes, preferably C2-C8 or C2-C5 alkenes, in branched or unbranched form, or a mixture thereof, and additionally
at least one monomer selected from the following group: maleic anhydride, itaconic anhydride, glycidyl acrylate, glycidyl methacrylate, acrylic acid, methacrylic acid, vinyl acetate, C1-C12 alkyl acrylates, C1-C12 alkyl methacrylates, substituted or unsubstituted styrene or a mixture of such monomers;
(c) 0-20 wt.-% of an aliphatic polyamide different from (a), or a mixture of such polyamides;
(d) 0-25 wt.-% of additives;
with the proviso that the fraction of components (c) and (d) may also be zero, and with the proviso that the sum of the components (a)-(d) makes 100 wt%,
for generating a polyamide layer (3) on a metal element (2), wherein the metal element (2) is coated with the polyamide layer (3) around the entire extent of the metal element (2), in an extrusion process, wherein the polyamide layer (3) is located immediately adjacent and without any adhesion promoting layer on the metal element (2), more particularly for producing an electrical conductor insulated with the polyamide layer (3).

## Revendications

1. Structure stratifiée (1) présentant au moins un élément métallique (2) sous forme d'un profilé sans fin et une couche de polyamide (3) disposée autour de toute la périphérie de l'élément métallique sur celui-ci dans un procédé d'extrusion, la couche de polyamide (3) se situant de manière directement adjacente et sans couche supplémentaire promotrice d'adhérence sur l'élément métallique (2), **caractérisée en ce que** la couche de polyamide (3) est constituée par une masse de moulage de polyamide qui est un mélange constitué par les composants suivants :
(a) 60-90% en poids d'un polyamide à base de diamines cycloaliphatiques, d'acides dicarboxyliques cycloaliphatiques ou tant à base de diamines cycloaliphatiques que d'acides dicarboxyliques cycloaliphatiques ou d'un mélange de ces polyamides, présentant une température de transition vitreuse (T_{g}) d'au moins 130°C ;
(b) 10-40% en poids d'une polyoléfine à base
de C₂-C₁₂-alcènes, sous forme ramifiée ou non ramifiée, ou d'un mélange correspondant, et en plus
d'au moins un monomère choisi dans le groupe suivant : anhydride de l'acide maléique, anhydride de l'acide itaconique, acrylate de glycidyle, méthacrylate de glycidyle, acide acrylique, acide méthacrylique, acétate de vinyle, acrylates de C₁-C₁₂-alkyle, méthacrylates de C₁-C₁₂-alkyle, styrène substitué ou non substitué ou un mélange de ces monomères ;
(c) 0-20% en poids d'un polyamide aliphatique différent de (a) ou d'un mélange de ces polyamides ;
(d) 0-25% en poids d'additifs ;
à condition que la proportion de composants (c) et (d) puisse également valoir zéro et que la somme des composants (a)-(d) représente 100% en poids.

2. Structure stratifiée (1) selon la revendication 1, **caractérisée en ce que** la masse de moulage en polyamide est un mélange des composants mentionnés (a)-(d) aux proportions suivantes :
(a) 65-90% en poids d'un polyamide à base de diamines cycloaliphatiques, d'acides dicarboxyliques cycloaliphatiques ou tant à base de diamines cycloaliphatiques que d'acides dicarboxyliques cycloaliphatiques ou d'un mélange de ces polyamides, présentant une température de transition vitreuse (T_{g}) d'au moins 130°C ;
(b) 10-20% en poids d'une polyoléfine à base
de C₂-C₁₂-alcènes, de préférence de C₂-C₈-alcènes ou de C₂-C₅-alcènes sous forme ramifiée ou non ramifiée, ou d'un mélange correspondant, et en plus
d'au moins un monomère choisi dans le groupe suivant : anhydride de l'acide maléique, anhydride de l'acide itaconique, acrylate de glycidyle, méthacrylate de glycidyle, acide acrylique, acide méthacrylique, acétate de vinyle, acrylates de C₁-C₁₂-alkyle, méthacrylates de C₁-C₁₂-alkyle, styrène substitué ou non substitué ou un mélange de ces monomères ;
(c) 10-20% en poids d'un polyamide aliphatique différent de (a) ou d'un mélange de ces polyamides ;
(d) 0,1-5% en poids d'additifs ;
à condition que la somme des composants (a)-(d) représente 100% en poids.

3. Structure stratifiée (1) selon l'une quelconque des revendications précédentes, **caractérisée en ce que** le ou les polyamides du composant (a) est/sont constitués par les éléments suivants :
(a1) 50 à 100% en mole, 60-100% en mole ou 80-100% en poids d'une diamine cycloaliphatique, de préférence choisie dans le groupe constitué par : bis-(4-amino-3-méthylcyclohexyl)-méthane (MACM), bis-(4-aminocyclohexyl)-méthane (PACM), bis-(4-amino-3-éthylcyclohexyl)-méthane (EACM), bis-(4-amino-3,5-diméthycyclohexyl)-méthane (TMACM), 1,3-bis-(aminométhyl)cyclohexane (BAC), 1,4-bis-(aminométhyl)cyclohexane ou leurs mélanges et
(a2) 0 à 50% en mole ou 0-40% en mole d'une diamine aliphatique ou aromatique comprenant 4 à 36 atomes de carbone ou des mélanges correspondants,
à chaque fois par rapport à la totalité de moles de diamines ainsi que
(a3) un ou plusieurs acides dicarboxyliques aliphatiques ou cycloaliphatiques comprenant 4 à 36 atomes de carbone, de préférence 8-18 atomes de carbone,
(a4) un ou plusieurs lactames ou acides aminocarboxyliques aliphatiques ou aromatiques comprenant 4-36 atomes de carbone, de préférence 10-18 atomes de carbone,
la proportion de composant (a4) étant de préférence de 0 à 50% en mole, en particulier de préférence de 2-45% en mole et de manière particulièrement préférée de 3 à 35% en mole, à chaque fois par rapport à la somme de tous les monomères formant (a).

4. Structure stratifiée (1) selon l'une quelconque des revendications précédentes, **caractérisée en ce qu'**il s'agit, pour le composant (a), d'un polyamide choisi dans le groupe suivant : MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC17, TMDC18, MACMI/12, MACMT/12, MACMI/MACMT/12, 6I/6T/MACMI/MACMT/12, 6I/MACMI/MACMT, 6I/PACMI/PACMT, 6I/6T/MACMI, MACMI/MACM36, 12/PACMI, 12/MACMT, 6/PACMT, 6/IPDT, 10I/10T/BACI/BACT, MACM9-18/PACM9-18, MACM9-18/TMDC9-18, TMDC9-18/PACM9-18, en particulier MACM10/PACM10, MACM12/PACM12 et MACM14/PACM14 ou leurs mélanges.

5. Structure stratifiée (1) selon l'une quelconque des revendications précédentes, **caractérisée en ce que**, pour le composant (b), la proportion de C₂-C₁₂-alcènes, de préférence de C₂-C₈-alcènes, sous forme ramifiée ou non ramifiée, ou d'un mélange correspondant, de préférence la proportion d'éthylène, de propylène, de butylène ou d'un mélange correspondant, se situe dans la plage de 50-95% en poids ou de 65 à 93% en poids ou de 80-95% en poids ou de 85 à 94% en poids, en particulier de préférence seul de l'éthylène étant présent,
ou **en ce que**, pour le composant (b), la proportion de C₂-C₃-alcènes, ou d'un mélange correspondant, se situe dans la plage de 50-95% en poids ou de 65 à 93% en poids ou de 80-95% en poids.

6. Structure stratifiée (1) selon l'une quelconque des revendications précédentes, **caractérisée en ce que** le composant (b), en tant que polyoléfine, est choisi dans le groupe suivant :
polyoléfine d'éthylène et de méthacrylate de glycidyle, présentant de préférence une teneur en méthacrylate de glycidyle de 7 à 14% en poids, par rapport à la somme de tous les monomères dans le copolymère ;
polyoléfine d'éthylène, d'acétate de vinyle et de méthacrylate de glycidyle, de préférence de 71-88% en poids d'éthylène, de 5-15% en poids d'acétate de vinyle et de 7-14% en poids de méthacrylate de glycidyle, par rapport à la somme de tous les monomères dans le copolymère ;
polyoléfine d'éthylène, de méthacrylate de vinyle et de méthacrylate de glycidyle, de préférence de 56-73% en poids d'éthylène, de 20-30% en poids de méthacrylate de vinyle et de 7-14% en poids de méthacrylate de glycidyle, par rapport à la somme de tous les monomères dans le copolymère ;
polyoléfine d'éthylène, d'acrylate de butyle et de méthacrylate de glycidyle, de préférence de 51-78% en poids d'éthylène, de 15-35% en poids d'acrylate de butyle et de 7-14% en poids de méthacrylate de glycidyle, par rapport à la somme de tous les monomères dans le copolymère ;
ou un mélange de ces polyoléfines.

7. Structure stratifiée (1) selon l'une quelconque des revendications précédentes, **caractérisée en ce que** le composant (c) est choisi dans le groupe suivant : polyamide 6, polyamide 10, polyamide 12, polyamide 1212, polyamide 1012, polyamide 1210, polyamide 46, polyamide 66, polyamide 612, polyamide 126, polyamide 106, polyamide 610, polyamide 1010, polyamide 614, polyamide 618, polyamide 1014, polyamide 1018, polyamide 1214, polyamide 1218 ainsi que les copolyamides et les mélanges correspondants.

8. Structure stratifiée (1) selon l'une quelconque des revendications précédentes, **caractérisée en ce que** le composant (d) est choisi dans le groupe suivant : les stabilisants aux UV, les stabilisants thermiques, les pièges de radicaux, les antioxydants, les adjuvants de transformation, les agents empêchant les inclusions, les lubrifiants, les adjuvants de démoulage, les plastifiants, les antistatiques, les charges telles qu'en particulier les charges particulaires, y compris les charges et/ou additifs nanométriques, ainsi que les charges fibreuses, en particulier les fibres de verre, les agents ignifuges, en particulier les agents ignifuges exempts d'halogène, les colorants, les pigments, les résidus de procédés de polymérisation, tels que les catalyseurs, les sels et les dérivés ou mélanges correspondants.

9. Structure stratifiée (1) selon l'une quelconque des revendications précédentes, **caractérisée en ce que** l'élément métallique est constitué par un métal choisi dans le groupe suivant : aluminium, cuivre, argent, zinc, fer, acier ou les mélanges et alliages respectifs correspondants, la surface pouvant être oxydée et/ou galvanisée.

10. Structure stratifiée (1) selon l'une quelconque des revendications précédentes, **caractérisée en ce que** la structure stratifiée présente une des structures suivantes :
élément métallique (2)/couche de polyamide (3) ;
élément métallique (2)/couche de polyamide (3)/autre couche ;
l'autre couche mentionnée étant, à raison d'au moins 50% en poids, à base d'une masse de moulage thermoplastique qui est différente de la masse de moulage de polyamide (3) et d'autres couches pouvant encore être disposées en plus sur la face opposée à l'élément métallique (2).

11. Structure stratifiée (1) selon l'une quelconque des revendications précédentes, **caractérisée en ce qu'**il s'agit, pour l'élément métallique (2), d'un profilé métallique sous forme d'un fil ou d'un conducteur plat qui est recouvert sur toute la périphérie par la couche de polyamide (3).

12. Structure stratifiée (1) selon la revendication 11, **caractérisée en ce qu'**il s'agit d'un conducteur électrique, pour lequel l'épaisseur de la couche de polyamide (3), mesurée perpendiculairement au sens principal du conducteur, est située dans la plage de 0,1-2 mm ou dans la plage de 0,25-0,75 mm.

13. Structure stratifiée (1) selon l'une quelconque des revendications précédentes, **caractérisée en ce que** le composant (b) est exclusivement constitué
par des C₂-C₁₂-alcènes ou des C₂-C₈-alcènes ou des C₂-C₅-alcènes, sous forme ramifiée ou non ramifiée ou d'un mélange correspondant, et
en outre par au moins un monomère choisi dans le groupe : anhydride de l'acide maléique, anhydride de l'acide itaconique, acrylate de glycidyle, méthacrylate de glycidyle, acide acrylique, acide méthacrylique, acétate de vinyle, acrylates de C₁-C₁₂, méthacrylates de C₁-C₁₂, styrène substitué ou non substitué ou un mélange de ces monomères,
de préférence en outre par un monomère choisi dans le groupe réduit suivant : anhydride de l'acide maléique, anhydride de l'acide itaconique, acrylate de glycidyle, méthacrylate de glycidyle, acide acrylique, acide méthacrylique, acétate de vinyle, acrylates de C₁-C₁₂-alkyle.

14. Procédé pour la préparation d'une structure stratifiée selon l'une quelconque des revendications précédentes, **caractérisé en ce que** l'élément métallique (2) sous forme d'un profilé sans fin, en particulier sous forme d'un fil ou d'un conducteur plat, est revêtu, dans un procédé d'extrusion, autour de toute la périphérie de l'élément métallique (2) par la couche de polyamide (3), la couche de polyamide (3) se situant de manière directement adjacente et sans couche supplémentaire promotrice d'adhérence sur l'élément métallique (2), de préférence **en ce que** le profilé sans fin alimenté à partir d'un rouleau est guidé conjointement avec le matériau de la couche de polyamide (3) à travers une filière d'extrusion.

15. Utilisation d'une masse de moulage de polyamide sous forme d'un mélange constitué par les composants suivants :
(a) 60-90% en poids d'un polyamide à base de diamines cycloaliphatiques, d'acides dicarboxyliques cycloaliphatiques ou tant à base de diamines cycloaliphatiques que d'acides dicarboxyliques cycloaliphatiques ou d'un mélange de ces polyamides, présentant une température de transition vitreuse (T_{g}) d'au moins 130°C ;
(b) 10-40% en poids d'une polyoléfine à base
de C₂-C₁₂-alcènes, de préférence de C₂-C₈-alcènes ou de C₂-C₅-alcènes sous forme ramifiée ou non ramifiée, ou d'un mélange correspondant, et en plus
d'au moins un monomère choisi dans le groupe suivant : anhydride de l'acide maléique, anhydride de l'acide itaconique, acrylate de glycidyle, méthacrylate de glycidyle, acide acrylique, acide méthacrylique, acétate de vinyle, acrylates de C₁-C₁₂-alkyle, méthacrylates de C₁-C₁₂-alkyle, styrène substitué ou non substitué ou un mélange de ces monomères ;
(c) 0-20% en poids d'un polyamide aliphatique différent de (a) ou d'un mélange de ces polyamides ;
(d) 0-25% en poids d'additifs ;
à condition que la proportion de composants (c) et (d) puisse également valoir zéro et que la somme des composants (a)-(d) représente 100% en poids,
pour produire une couche de polyamide (3) sur un élément métallique (2) sous forme d'un profilé sans fin autour de la périphérie totale de l'élément métallique dans un procédé d'extrusion, la couche de polyamide (3) étant située de manière directement adjacente et sans couche promotrice d'adhérence supplémentaire sur l'élément métallique (2), en particulier pour la fabrication d'un conducteur électrique isolé par la couche de polyamide (3).
